# EUROPEAN PATENT APPLICATION

(11) **EP 1 168 809 A2**
(43) Date of publication of application: **02.01.2002**
(21) Application number: 01304976.2
(22) Date of filing: 07.06.2001
(51) Int. Cl.: H04N 1/00

(54) **System and method for electronically creating a sequence of still-frame images from animation work**

(30) Priority: 07.06.2000 JP 2000170887
(71) Applicant: SONY CORPORATION, Tokyo 141 (JP)
(72) Inventor: Kawai, Eji, Shinagawa-ku, Tokyo (JP); Ito, Takeshi, Sony Computer Entertainment Inc., Minato-ku, Tokyo (JP)
(74) Representative: Horner, David Richard

(57) **Abstract**

Provided is a system for electronically creating a sequence of still-frame images such as a comic strip from an already broadcast or shown animated cartoon and providing them to a user comprising: a frame information generating apparatus and an information providing apparatus. The frame information generating apparatus generates digital still-frame image information electronically based on the animated cartoon. The information providing apparatus provides to a user the still-frame image information thus generated. With this configuration, most of frames of the animated cartoon can almost be handled in the digital information processing field without being converted into paper media. The still-frame image information is electronically distributed to the information processing device of users through the existing broadcasting infrastructure or communication infrastructure. Alternately, the still-frame image information is recorded on a recording medium so that the information can be provided to users through the existing sales infrastructure.

## Description

### BACKGROUND OF THE INVENTION

The present invention relates to a system and a method for electronically creating a sequence of still-frame images, for example a comic strip, from an animation work.

Conventionally, animation works such as animated cartoon and clay animation created by utilizing an animation movie technique (hereinafter, referred to as "an animation work") are broadcast on a television or are often shown in a cinema. The animation movie technique used here denotes a method for acquiring a film by photographing a sequence of frames one by one whilst gradually changing a character in the frame, and continuously projecting these video images of the frames on a screen, thereby providing the feeling of the character's movement to an audience. An animation program broadcast on television or an animation movie shown in the cinema requires tremendous man power and cost for its production.

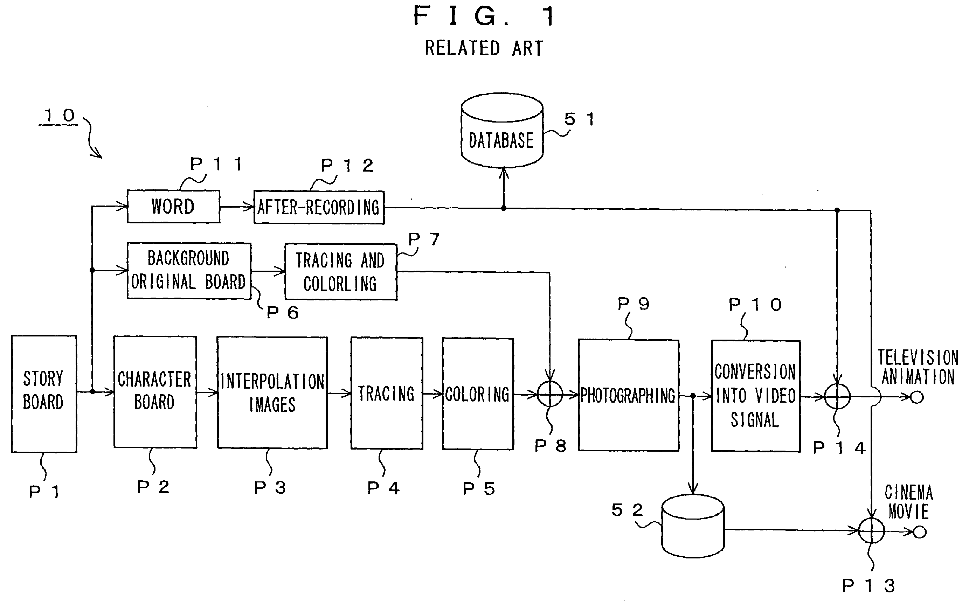

Fig. 1 is a block diagram depicting conventional exemplary process in an animation production system 10. For example, when producing an animation film for cinema movie or TV animation for broadcasting, an author prepares a storyboard, which is an origin of a character raw image, at the step P1 in the animation production process shown in Fig. 1.

Then, on one hand, a plurality of color character original boards excluding background are produced based on the storyboard in accordance with the steps P2 to P5. At the step P2, an original image such as character is derived from the storyboard. At the step P3, interpolation images for interpolating between the original images are produced, and whereby a series of character movement images are produced. At the step P4, each of these character movement images is traced on a transparent substrate one by one. At the step P5, coloring is applied thereto. In this manner, a plurality of color character original boards can be obtained.

On the other hand, in parallel to the steps P2 to P5, background original boards are produced at the step P6. Then, processing goes to the step P7 at which the background images are traced on a transparent substrate one by one, and coloring is applied thereto, whereby the color background original boards are obtained. Then, processing goes to the step P8 at which the character original boards are superimposed on the background original boards. Thereafter, at the step P9, each of the character original boards are photographed by using a general camera one by one with each character original board being superimposed on the background original board. In this manner, an animation film base 52 consisting of a sequence of frames is produced.

In parallel to producing this animation film base 52, at the step P11, a word for the character is produced. Thereafter, at the step P12, an effect sound caused by an acoustic device and/or a word dubbed by an actor is recorded (after-recorded). The after-recorded formation is stored on an after-record database 51.

At the step P13, when after-recorded formation is written synchronously into this animation film base 52, an animation film for cinema movie can be produced. In addition, a film scanner converts the animation film base 52 into a video signal at the step P10 When the video signal and the after-recorded formation are synchronized with each other at the step P14, TV animation can be produced.

In the meantime, with respect to an animation work, animation production companies cannot take a profit by showing it once in cinema or by broadcasting it once on television. They can actually recollect only about 70% of its production cost. Because of this, many animation production companies develop their businesses into a variety of secondary utilization businesses using their reserved contact right, thereby compensating for a loss (recouping). The contact right used here denotes a right for accepting a use license concerning secondary utilization of media.

For example, an animation work may be converted into paper media. Such media is called "animation comic", "animation book" or "film comic" and it is provided to users. Because many publishing companies edit the animation works into the form of books in the media of such types, the contact right is almost always returned to the publishing companies who are origins of comics.

When such an animation work is secondarily utilized after being converted into paper media, the following problems will occur:
<1> Where comic books produced after being secondarily used remain unsold in a book distribution process, there occurs a problem relevant to returning these unsold books and unnecessary stocks. This is uncommercial for secondary users.
<2> When media are provided in the form of books, there occurs a problem relevant to leaving old read comic books in public space unduly, which loses beautification and which is not environmentally preferable. In addition, these old books must be manually recollected, which is poor in recycle efficiency.

A method for utilizing an animation work as digital information, which can be found in electronic books, may be available. In this case, however, with respect to an information processing device in consideration of compactness found in a book, if there is employed a method of storing an animation work on a memory as it is without any thought, a hand held terminal device must have a tremendous memory capacity. This causes a problem that its essential compactness is lost.

### SUMMARY OF THE INVENTION

The present invention aims to alleviate such conventional problems.

Embodiments of the present invention provide a system and a method for electronically creating a sequence of still-frame images from an animation work and providing them to a user.

According to a first aspect of the present invention, a system comprises a frame information generating apparatus and an information providing apparatus. The frame information generating apparatus may electronically generate digital still-frame image information based on the already broadcast or shown animation work. The information providing apparatus may provide to a user this still-frame image information. Namely, this system is capable of secondarily utilizing an animation work in the form of digital information without converting it into paper media.

In accordance with one embodiment of the invention, an information reconfiguring unit in the frame information generating apparatus may reconfigure video image information arbitrarily extracted from digital information on contents in the animation work as the still-frame image information. A video image information combining unit then may combine word video image information such as a word stand-in video image with this still-frame image information. The still-frame image information combined with the word video image information is provided from the information providing apparatus to a user. The still-frame image information may be electronically distributed to the user's information processing device using the existing broadcasting infrastructure or the communication infrastructure. Further, the still-frame image information may be also recorded on a recording medium so that the information can be provided to the user through an existing sales infrastructure.

Namely, most of the animation work can be handled in the digital information processing field without being converted into paper media.

Moreover, work for producing a sequence of the still-frame images can be efficiently performed, and its producing cost can be reduced. Thus, a special effect can be added to a background image or character image, which has been impossible to be added on paper media, and expression of the still-frame image can be increased.

In accordance with another aspect, the frame information generating apparatus comprises a video image information extracting unit, an information reconfiguring unit and a video image information combining unit. The video image information extracting unit may extract video image information arbitrarily from digital information on contents in the animation work. The information reconfiguring unit may reconfigure the video image information as the still-frame image information. The video image information combining unit may combine word video image information with the still-frame image information.

Therefore, the digital information on contents in the animation work can be handed as it is without converting an animation work element into paper media. The information can be electronically distributed to the user's information processing device using the existing broadcasting infrastructure or the communication infrastructure. It may be recorded on recording media so that it can be provided to the user through the existing sales infrastructure.

Work for combining the word video image information with the still-frame image information can be performed more efficiently, and thus the combining costs therefor can be reduced. According to this frame information generating apparatus, a special effect can be also added to a background image or character image, which has been impossible to add in paper media, and expression of the still-frame image can be increased.

In accordance with a further aspect of the present invention, the frame information generating apparatus comprises a video image extracting unit, a data converting unit and a video image information combining unit. The video image extracting unit may extract a frame image arbitrarily from an animation film according to the animation work. The data converting unit may convert the frame image into the digital still-frame image information. The video image information combining unit may combine word video image information with the still-frame image information.

Therefore, according to this frame information generating apparatus, the animation film can be handled as digital still-frame image information without converting an animation work into paper media. The still-frame image information can be also electronically distributed to the user's information processing device using the existing broadcasting infrastructure or the communication infrastructure. Further, the information may be recorded on a recording medium so that it can be provided to the user through the existing sales infrastructure.

In accordance with another aspect of the present invention, a device for processing still-frame image information comprises an operating unit, a storage unit, display unit and a control unit. The operating unit allows a user to operate the device to input the information on contents of the still-frame image. The storage unit may store the still-frame image contents information. The display unit may display the still-frame image based on the still-frame image contents information read out of the storage unit. The control unit may control at least input/output of said storage and display units so that a user can advance the still-frame image displayed on the display unit in a frame-by-frame manner at a predetermined frame speed.

According to this information processing device, automatic frame advancing according to the user's pace can be achieved without making search for page as is the case with a conventional comic book. In this manner, operability and convenience on processing the still-frame image information can be remarkably improved.

In accordance with still another aspect of the present invention, a recording medium records information about contents of a sequence of still-frame images created electronically from an already broadcast or shown animation work. The contents information is generated by reconfiguring as the still-frame image information the video image information arbitrarily extracted from the digital information on contents in the animation work, and by combining word video image information with the still-frame image information.

In accordance with yet another aspect of the present invention, another recording medium records information about contents of a sequence of still-frame images created electronically from an already shown or broadcast animation work. The contents information is also generated by converting frame image arbitrarily extracted from an animation film according to the animation work into the digital still-frame image information, and by combining word video image information with the still-frame image information.

According to these recording mediums, the electronically processed data, which is recorded on these recording mediums can be respectively distributed through the existing sales infrastructure. Thus, an unsold stock problem with comic books or the associated return processing problem, which has been the most difficult in a book distribution process, can be solved completely. In particular, using a recyclable nonvolatile semiconductor memory with respect to the recording medium causes smaller, light package media to be distributed. Moreover, a conventional problem with recollection of old read comic books can be solved.

In accordance with still further aspect of the present invention, a method for creating a sequence of still-frame images electronically from an animation work and providing it to a user is provided. In this method, digital still-frame image information is electronically generated based on the animation work, and thus generated still-frame image information is provided to a user.

According to this method, most animation work can be handled in the digital information processing field without being converted into paper media. The still-frame image information may be electronically distributed to the user's information processing device using the existing broadcasting infrastructure or communication infrastructure. It may be recorded on a recording medium so as to be provided to the user through the existing sales infrastructure.

Moreover, work for producing a sequence of the still-frame images can be efficiently performed, and its producing cost can be reduced. Thus, a special effect can be added to a background image or character image, which has been impossible to be added on paper media, and expression of the still-frame image can be increased.

Preferred embodiments of the present invention provide a system and a method wherein, in the case of constructing a business model on the still-frame images, for example, a comic strip, electronically created from an already broadcast or shown animation work, frame information generating apparatus is provided for electronically generating digital image information on each of the frames of the comic strip based on the animation work. Thus generated still-frame image information is electronically distributed without converting animation work into paper media through an existing broadcasting infrastructure or communication infrastructure. The still-frame image information may be recorded on a recording medium so as to be provided to a user through an existing sales infrastructure.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWING(S)

The present invention will be described further, by way of example only, with reference to preferred embodiments thereof as illustrated in the accompanying drawings, in which:
Fig.1 is a block diagram depicting conventional exemplary process in an animation production system;
Fig. 2 is a block diagram depicting an exemplary configuration of a still-frame image information providing system according to a first embodiment of the present invention;
Fig. 3 is a block diagram depicting a still-frame image information providing system according to a second embodiment of the present invention;
Fig. 4 is a flow chart showing exemplary processing according to the embodied still-frame image information providing method;
Fig.5 is an imaginary view showing an exemplary configuration of a business model concerning a still-frame image information providing system according to embodiments of the present invention;
Fig. 6 is a block diagram depicting an exemplary configuration of a frame information generating apparatus;
Fig. 7 is an imaginary view showing an extraction example of video image information;
Fig. 8A is an imaginary view showing a combination example of a still-frame image information and a word video image information;
Fig. 8B is an imaginary view showing a combination example of a still-frame image information and a word video image information;
Fig. 9A is an imaginary view showing a generation example of still-frame image information;
Fig. 9B is an imaginary view showing a generation example of still-frame image information;
Fig. 9C is an imaginary view showing a generation example of still-frame image information;
Fig. 9D is an imaginary view showing a generation example of still-frame image information;
Fig. 10 is a flow chart showing an exemplary processing in a frame information generating apparatus;
Fig. 11 is a block diagram depicting an exemplary configuration of the information providing apparatus and its periphery system;
Fig. 12 is an imaginary view showing a format example of data rows;
Fig. 13 is an imaginary view showing an exemplary configuration of a still-frame image information providing service system according to the first embodiment;
Fig. 14 is a block diagram depicting an example of internal configuration of a tuner device and a hand held terminal device used in the service system.
Fig. 15 is a flow chart showing an operation example of the tuner device;
Fig. 16 is a flow chart (main routine) showing exemplary processing during reproduction in the hand held terminal device;
Fig. 17 is a flow chart (subroutine) showing an application processing example;
Fig. 18 is an imaginary image showing an exemplary configuration of a still-frame image information providing service system according to the second embodiment;
Fig. 19 is a block diagram depicting an example of internal configuration of a hand held terminal device used in the service system according to the first embodiment; and
Fig. 20 is an imaginary view showing an address example of a copy right and its contact right in a business model concerning a still-frame image information providing system.

### DETAILED DESCRIPTION OF THE PREFERRED EMBODIMENT(S)

### (1) Preferred First Embodiment:

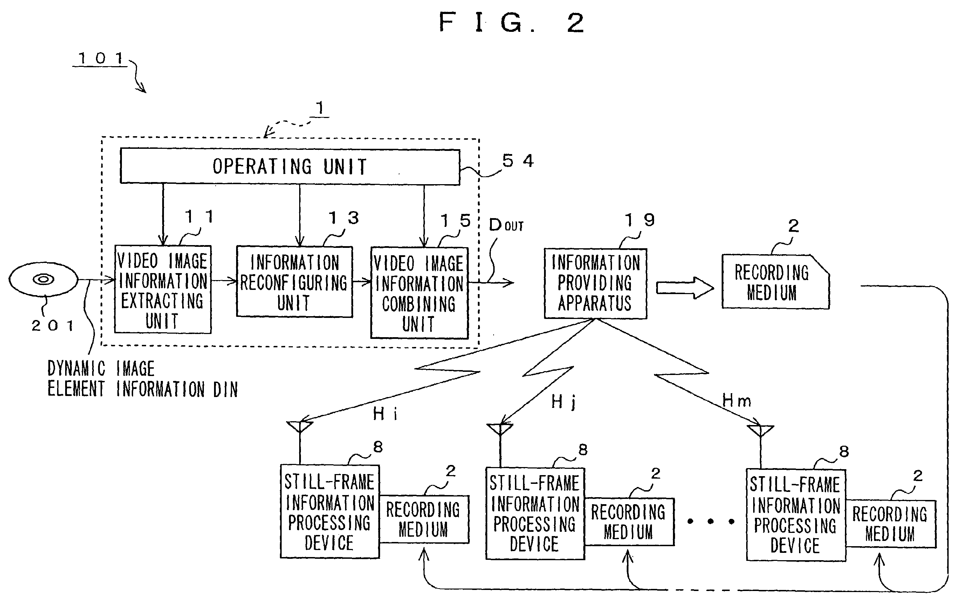

Fig. 2 is a block diagram depicting an exemplary configuration of a still-frame image providing system 101 according to a preferred first embodiment of the present invention. The still-frame image exemplifies a video image shown in a frame of animated cartoon, but is not restricted to it.

In this embodiment, in the case of constructing the still-frame image business model, a frame information generating apparatus according to the first aspect is provided so as to generate digital still-frame image information based on information about digital contents included in an already broadcast or shown animation work. In addition, the still-frame image information can be electronically distributed using the existing broadcasting infrastructure or communication infrastructure without converting the animation work into paper media. Alternatively, the still-frame image information is recorded on a recording medium so that the information can be provided to a user through the existing sales infrastructure.

The still-frame image providing system 101 shown in FIG. 1 is directed to a system for reconfiguring an animation work that has already been broadcast or shown on television or in cinema as the still-frame image information and providing it to a plurality of users Hj (j = 1 to m). In this system 101, a frame information generating apparatus 1 according to the first aspect is provided so as to generate digital still-frame image information DOUT based on the animation work.

The frame information generating apparatus 1 is operated by loading a CD-ROM 201 having information DIN about digital contents included in the animation work (hereinafter called digital dynamic image element information DIN) recorded therein. For example, the dynamic image element information DIN is directed to an animation work that has already been broadcast or shown on television or at theater. This apparatus includes, for example, a video image information extracting unit 11, an information reconfiguring unit 13, a video image information combining unit 15, and an operating unit 54. The video image information extracting unit 11 is intended to extract arbitrary animation video image information from the digital dynamic image element information DIN according to an animation work.

The information reconfiguring unit 13 is connected to the video image information extracting unit 11 so as to reconfigure an animation video image information extracted by this video image information extracting unit 11 as the still-frame image information. The information reconfiguring unit 13 is connected to the video image information combining unit 15 so as to combine word video image information, for example, a word stand-in video image with the still-frame image information reconfigured by the information reconfiguring unit 13. The thus generated still-frame image information DOUT is exemplarily directed to a still image based color comic work. The still-frame image information DOUT may contain voice information corresponding to a word in the word stand-in video image.

The operating unit 54 is connected to these video image information extracting unit 11, information reconfiguring unit 13, and video image information combining unit 15 so as to make input operation of special effect information for applying a comic function effect to the still-frame image information DOUT. This special effect information is input so as to add functions, which are specific to the electronic media, for providing story properties or game properties to the still-frame image information DOUT, adding a book mark, providing a random access function, and providing the associated information search function. Otherwise, a comic function effect such as character movement or background image enhancement can be provided.

An information providing apparatus 19 is connected to this frame information generating apparatus 1 so as to electrically distribute (provide) the still-frame image information DOUT simultaneously or individually to an information processing device 8 of a plurality of users Hj by utilizing the existing broadcasting infrastructure or the communication infrastructure. In the case of taking emphasis on compactness, the information processing device 8 may be combined with a hand held terminal device. The hand held terminal device includes the devices to which specific tuner device and a memory card are mountable, and hand held telephone set a tuner function to which a memory card is mountable. Otherwise, a composite processing device with a tuner function, capable of mounting a recording medium such as CD or CD-ROM and a display device such as home-user television or monitor may be combined with each other.

Now, an exemplary operation of the still-frame image providing system 101 according to the first embodiment will be described here. In this example, where the still-frame image from the already broadcast or shown animation work is provided to users Hj, the frame information generating apparatus 1 generates the digital still-frame image information DOUT based on such animation work.

For example, when a CD-ROM 201 or the like having dynamic image element information DIN recorded therein is loaded to the frame information generating apparatus 1 and then the video image information extracting unit 11 is operated by means of the operating unit 54, arbitrary animation video image information is extracted from the digital dynamic image element information DIN according to the animation work. The information reconfiguring unit 13 reconfigures the video image information extracted by this video image information extracting unit 11 as the still-frame image information. Then the video image information combining unit 15 combines thus reconfigured still-frame image information with a word stand-in video image. Further, the information providing apparatus 19 provides the still-frame image information DOUT generated by the frame information generating apparatus 1 to the users Hj. For example, the still-frame image information DOUT is electronically distributed to the information processing device 8 of users Hj by utilizing the existing broadcasting infrastructure or the communication infrastructure.

Therefore, most animation works can be handled in the digital information processing field without being converted into paper media. The still-frame image information DOUT may be recorded on a recording medium 2 so that the information can be provided to the users Hj through the existing sales infrastructure

Moreover, a still-frame image production work such as the work of combining a word stand-in video image with the still-frame image information can be efficiently performed, thereby reducing the cost for producing the still-frame image. Thus, a special comic function effect can be added to a background image or character image, which has been impossible to be added on paper media. This allows expression of the still-frame image to be increased.

Moreover, the users Hj can receive still-frame image information DOUT electronically distributed via broadcast or communication, and thus, there is no need to visit a bookstore in order to purchase a desired comic book. Further, the electronically processed data can be distributed by way of a broadcasting infrastructure or a communication infrastructure, and thus, an unsold comic book stock problem or associated return processing problem, which has been most difficult in a book distribution process, can be solved completely.

In addition, by compressing still-frame image information DOUT and providing it to users Hj, swift moving advancement of image compression technique and technical innovation of display device are expected and thus higher data compression and higher picture quality can be also expected. In this case, voice compression technology will be influenced by such swift moving advancement and technical innovation.

### (2) Preferred Second Embodiment:

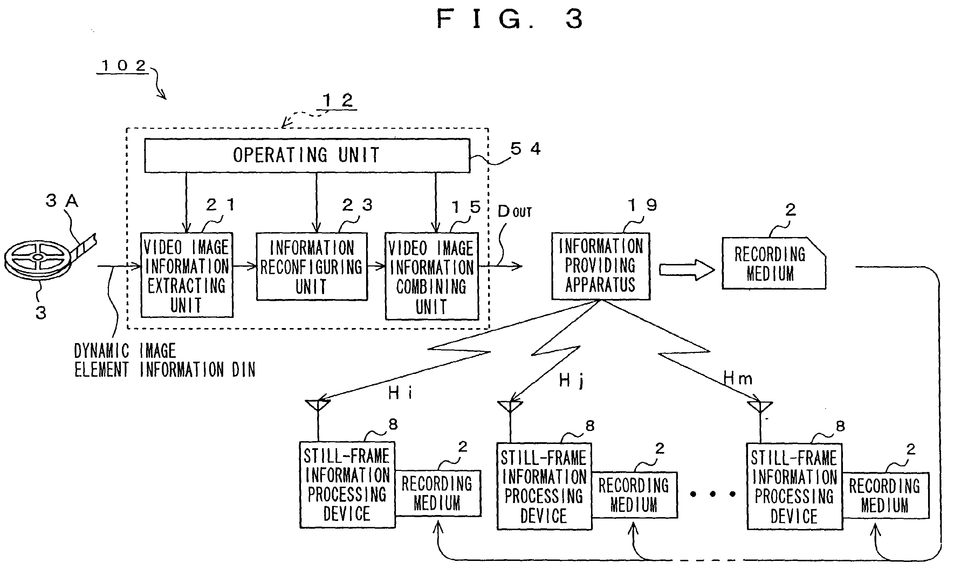

Fig. 3 is a block diagram depicting an exemplary configuration of a still-frame image providing system 102 according to a preferred second embodiment of the present invention.

In this embodiment, in the case of constructing a business model for providing the still-frame image information, the frame information generating apparatus 12 according to the second embodiment is provided for extracting arbitrary animation video image information from animation film 3A according to an already broadcast or shown animation work so as to generate the still-frame image information DOUT. In this manner, as in the first embodiment, the still-frame image information DOUT can be electronically distributed, and the still-frame image information DOUT is recorded on a recording medium 2 so that the information can be provided to users through the existing sales infrastructure.

The frame information generating apparatus 12 is provided in a still-frame image providing system 102 shown in Fig. 3 so as to generate frame information contents which is created as a comic strip from an animation work. The frame information generating apparatus 12 is used by setting a reel 3 or the like winding the animation film 3A. This apparatus comprises a video image extracting unit 21, a data converting unit 23, a video image information combining unit 15, and an operating unit 54. At the video image extracting unit 21, for example, the animation film 3A according to the animation work is scanned by a film scanner function, and the scanner function is operated so as to extract arbitrary animation frame image information for that video image extracting unit 21. The data converting unit 23 is connected to the video image extracting unit 21 so as to convert the animation frame image information extracted by this video image extracting unit 21 into digital still-frame image information.

A video image information combining unit 15 is connected to the data converting unit 23. The still-frame image information obtained by this data converting unit 23 is combined with a word stand-in video image as in the first embodiment. An operating unit 54 is connected to these video image extracting unit 21, data converting unit 23, and video image information combining unit 15 as in the first embodiment so as to make input operation of special effect information for applying a comic function effect to the still-frame image information DOUT.

In this manner, as in the first embodiment, there can be provided comic function effects such as character movement, enhancement of background image, addition of story properties, addition of book mark, momentous access of associated information, or random access to desired scene. Like elements and reference numerals corresponding to these in the first embodiment have same functions. A description of these elements and reference numerals will be omitted here.

Now, an exemplary operation of the still-frame image providing system 102 according to the second embodiment will be described here. In this embodiment, in the case where an already broadcast or shown animation work on television or in cinema is provided as a comic to users Hj, the digital still-frame image information DOUT is generated based on the animation work by means of the frame information generating unit 12.

For example, a reel 3 or the like winding the animation film 3A is set at the frame information generating apparatus 12. The video image extracting unit 21 is then operated by means of the operating unit 54, and arbitrary animation video image information is extracted from the animation film 3A according to the animation work. Thus extracted animation video image information is converted into digital still-frame image information by means of a data converting unit 23. The still-frame image information processed by this data converting unit 23 is combined with a word stand-in video image by means of the video image information combining unit 15. The still-frame image information DOUT generated by the frame information generating apparatus 12 is provided from the information providing apparatus 19 to users Hj.

Therefore, the animation work can be handled as the digital still-frame image information DOUT without being converted into paper media. The still-frame image information DOUT can be electronically distributed to the still-frame image information processing device 8 of the users Hj by utilizing the existing broadcasting infrastructure or the communication infrastructure. The still-frame image information DOUT can be recorded on a recording medium 2 so that the information can be provided to the users Hj through an existing sales infrastructure.

In this manner, like the first embodiment, a still-frame image production work can be efficiently performed, and the cost therefor can be reduced. Thus, a comic function effect can be added to a background image or character image, which has been impossible to be added on paper media, and expression of a still-frame image can be increased.

### (3) Embodied still-frame image providing method:

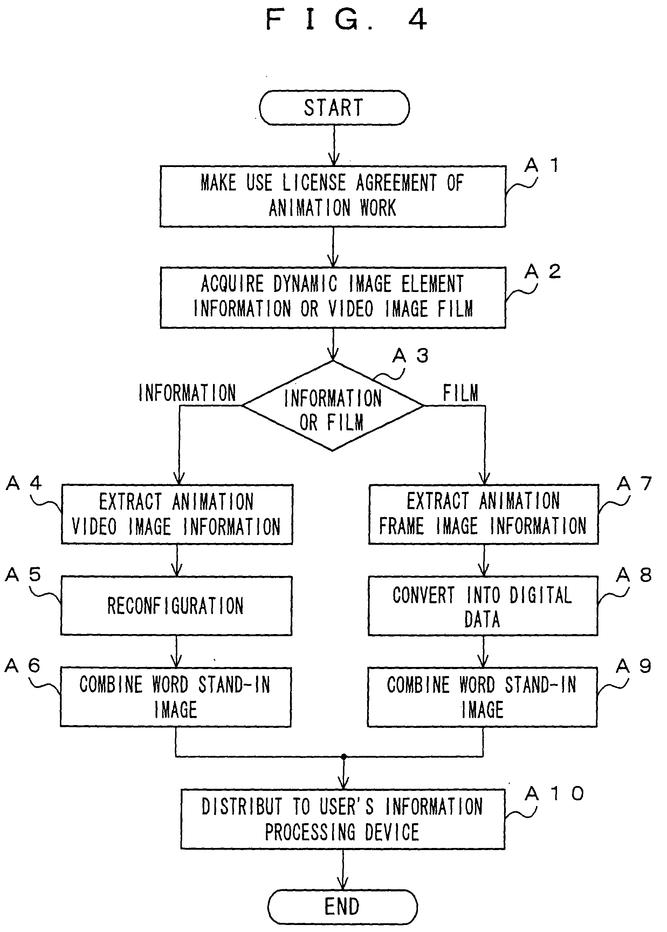

Fig. 4 is a flow chart illustrating exemplary processing according to an embodied still-frame image providing method.

In this embodiment, in the case where an animation work that has already been broadcast or shown on television or in cinema is provided as a comic strip to users Hj, a use license agreement with the copy right owner should be made and the right to use that animation work should be acquired. Then, it is presumed that digital still-frame image information DOUT is acquired based on this right, and that thus generated still-frame image information DOUT is provided to users Hj.

In this embodiment, it is presumed that: the frame information generating apparatus 1 described in the preferred first embodiment is provided; there is provided a first production procedure for generating the still-frame image information DOUT based on the dynamic image element information DIN using the frame information generating apparatus 1; the frame information generating apparatus 12 described in the second embodiment is provided; there is provided a second production procedure for generating the still-frame image information DOUT based on the animation film 3A; and an electronic animation information generating entity (hereinafter, referred to as a new entity) can select any of these production procedures freely.

With these conditions being presumed, at the step A1 of the flow chart shown in Fig. 4, in a case where the still-frame image information DOUT is generated using an already shown animation work that has been shown in cinema, the new entity makes use license agreement with author and animation production company. In the case of using an animation work that has been broadcast on television, in addition to the above described two parties, the use license agreement with a television company is made.

Then, at the step A2, the new entity acquires the dynamic image element information DIN or the animation film 3A according to the use license agreement. The dynamic image element information DIN is recorded on a CD-ROM 201 or the like, and the animation film 3A is distributed while the film is wound by the reel 3. The use license charge of this animation work is paid from the new entity to the author, the animation production company and/or the television company in accordance with the use license agreement.

Where the first production procedure is selected at the step A3, it goes to the step A4 at which the CD-ROM 201 having dynamic image element information DIN recorded thereon is set to the first frame information generating apparatus 1. When the operating unit 54 is operated, arbitrary animation video image information is extracted from the digital dynamic image element information DIN according to an animation work by means of the video image information extracting unit 11. An operator may extract an original image unit from the animation video image information. This is because the original image unit is often drawn by author unlike an interpolated image.

The information reconfiguring unit 13 then reconfigures thus extracted animation video image information as the still-frame image information. When the animation video image information on the original image unit is connected with each other, target still-frame image information can be acquired. The video image information combining unit 15 combines thus reconfigured still-frame image information with a word stand-in video image. A word is replaced with a character stand-in, and image mixing is performed. At this time, voice information corresponding to a word stand-in video image may contain still-frame image information DOUT.

Further, special effect information such as character movement or background image enhancement effect may be added to the still-frame image information DOUT. Performance such as providing story properties to the still-frame image by operator's operation is possible. A comic specific book mark may be added. Associated information about characters or a creator and/or special effect information for randomly accessing a desired scene momentarily may be added.

Furthermore, in order to execute automatic frame advancing according to the user's pace, there may be contained program information for selecting auto mode or manual mode with respect to an animation video image. When these items of specific effect information are added, a comic function effect can be increased. A color still-frame image such as a color comic strip can be produced based on these items of the still-frame image information DOUT, the word stand-in video image, and the special effect information.

In addition, in the case where the second production procedure is selected at the step S3, it goes to the step A7 at which a reel 3 or the like winding the animation film 3A is set to the second frame information generating apparatus 12. When the operating unit 54 is operated, the video image extracting unit 21 extracts an animation frame image information arbitrarily from the animation film 3A. As with the first production procedure, an original image unit may be extracted from the animation frame image information.

At the step S8, the animation frame image information extracted by this video image extracting unit 21 is converted into digital still-frame image information by means of the data converting unit 23. When the frames including the animation frame image information of the original image unit are connected to another one, the still-frame image information can be acquired as with the first production procedure. At the step A9, the video image information combining unit 15 combines thus organized still-frame image information with a word stand-in image. At this time, the voice information corresponding to a word stand-in image may contain the still-frame image information DOUT.

Further, additional information is added to the still-frame image information DOUT as with the first production procedure so that a comic function effect may be enhanced. A color still frame image such as a color comic strip can be produced according to these items of still-frame image information DOUT, the word stand-in image, and the additional information.

Then, processing goes to the step A10 at which the still-frame image information DOUT is electronically distributed to the information processing device 8 of users Hj using the existing broadcasting infrastructure or the communication infrastructure. At this time, with respect to the still-frame image information DOUT, voice information is compressed in accordance with a MP3 system or ATRAC system so as to be synchronously attached to the still -frame image data. Video image information is compressed in accordance with a desired compression system such as JPEG system or MPEG 1 to 4 systems. Then, the compressed information is provided to users Hj by way of bit assignment or package contents. For example, the still-frame image information DOUT is recorded on a recording medium 2 such as CD-ROM cassette or memory card, and this recording medium 2 may be provided to users Hj through the existing sales infrastructure.

In this way, in the still-frame image providing method according to embodiments of the present invention, many animation works can be handled in the digital information processing field without being converted into paper media; and still-frame image information DOUT is electronically distributed to the information processing device 8 of the users Hj using the existing broadcasting infrastructure or the communication infrastructure. Alternatively, the still-frame image information DOUT is recorded on the recording medium 2 so that the information can be provided to many users Hj through the existing sales infrastructure.

Moreover, a still-frame image production work can be efficiently performed, and the cost therefor can be reduced. Thus, the special comic function effect can be added to a background image or character image, which has been impossible to be added on paper media, and expression of a still-frame image can be increased.

The users had to visit a bookstore at which conventional animation comics are provided as paper media. However, a sequence of the still-frame images of embodiments of the present invention can be distributed via a broadcast as is the case with television animation, and can be distributed to individual users Hj on demand using a communication infrastructure. Of course, as in books, the still-frame images can be distributed as package media.

In this case, by using a semiconductor memory such as memory card, a much smaller, light medium compared with a book can be distributed. In addition, when a write enable memory card (such as flash memory) is used, the user can enjoy rewriting a data downloaded from a broadcasting or communication on it any times.

### (4) Embodiments

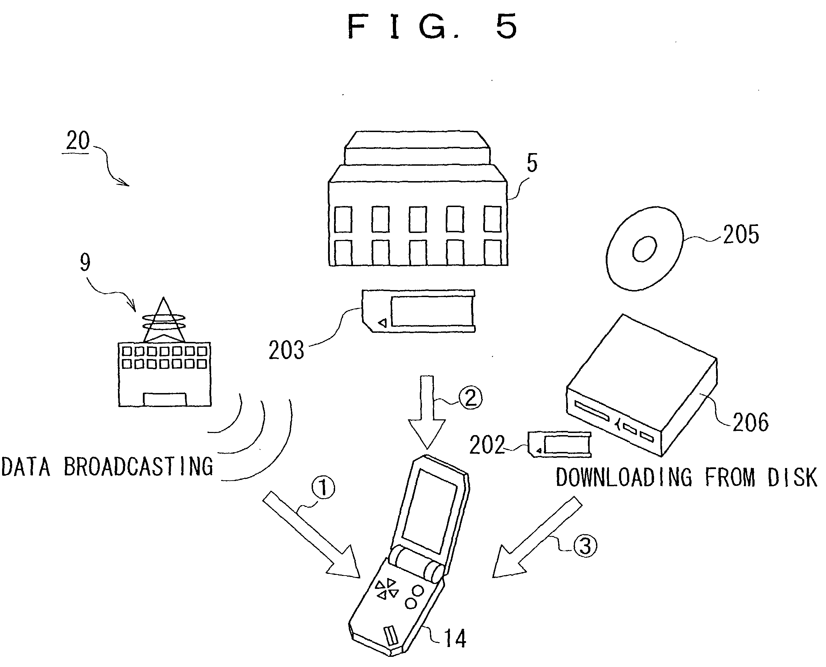

Fig. 5 is an imaginary view showing a software distribution example in a business model 20 for providing the still-frame image information such as a comic strip according to an embodiment of the present invention. According to such the still-frame image business model 20 shown in Fig. 5, three distribution modes <1> to <3> are provided with respect to the above software.

In the distribution mode <1>, the software is provided to be multiplied with ground wave data from a broadcasting station 9 to a dedicated hand held terminal device 14 so as to view a still-frame image at the hand held terminal device 14. In this case, the broadcasting infrastructure includes a satellite broadcast or cable television and the like without being limited to ground waves. In addition, the broadcasting infrastructure may be provided by a configuration in which the still-frame image software is downloaded to a hand held terminal device 14 after being temporarily received by a receiver machine without directly receiving the software.

In the distribution mode <2>, the still-frame image software is sold and provided to users as package media such as cell cassette 203 (hereinafter, referred to as an animation memory card) at a sales shop 5 such as general book stores, game shops, kiosks, convenience stores, mass sales stores, or electrical shops. The same sales mode as those of current books, game software, music CD is adopted. The users can enjoy their desired still-frame image anywhere and anytime they like by mounting the animation memory card 203 on the hand held terminal device 14.

In the distribution mode <3>, the still-frame images are recorded on large capacity package media such as DVD-ROM 205 provided by a new entity so that the users purchases this DVD-205. Then, by means of a dedicated reproduction and recording apparatus 206, the still-frame images are downloaded from the DVD-ROM 205 into the memory card 202 such as flash memory that is convenient to be hand held. Then, the users can enjoy their desired still-frame images anywhere and anytime by mounting the memory card 202 on the hand held terminal device 14 in the same manner as that in distribution mode <2>. Of course, the still-frame image software may be downloaded to the memory card 202 after received by a tuner incorporated reproduction and recording apparatus (console) instead of downloading from the package media.

In this way, in the business model 20 according to each of the embodiments, at least three distribution modes <1> to <3> of the still-frame image software are provided, which can contribute to industrial development as new business. Moreover, many suppliers of animation elements are animation production companies that are active in secondary utilization of animation work. If a tremendous amount of animation works is produced, there is no anxiety about content sources.

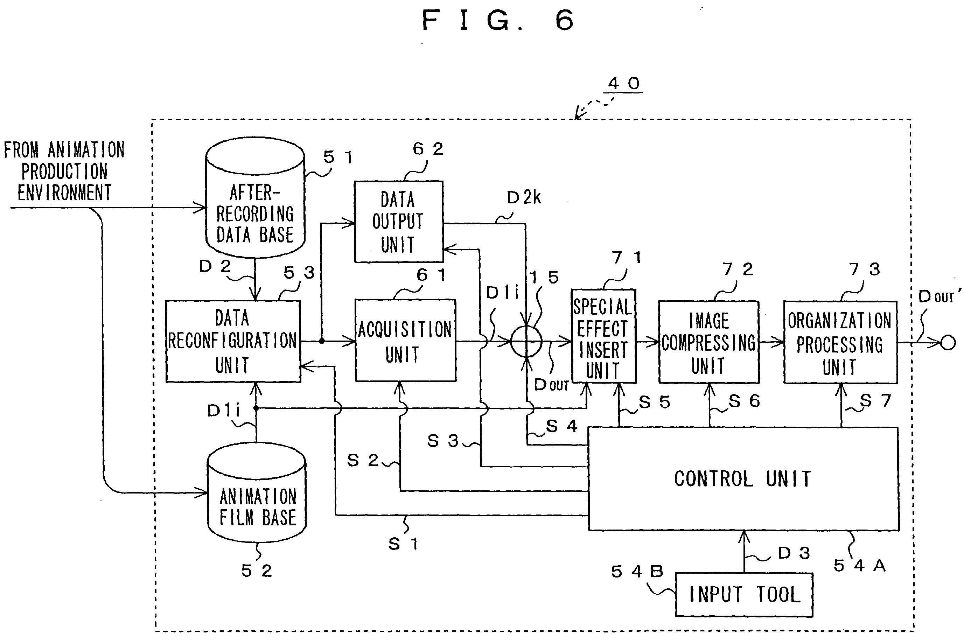

Now, an exemplary configuration of a still-frame image generating apparatus 40 will be described here. The still-frame image generating apparatus 40 shown in Fig. 6 is provided as an example of the frame information generating apparatus, wherein the still-frame image information DOUT is generated based on an after recording database 51 and an animation film base 52 in the existing animation production system.

A data reconfiguring unit 53 is provided at this still-frame image generating apparatus 40 so that animation video image information D1i (i = 1 to n) or voice information D2 and the like is extracted from the after recording database 51 and the animation film base 52 based on a video image information extraction configuration signal S1 so as to reconfigure them. The after recording database 51 and the animation film base 52 are acquired from animation production environment by making use license agreement with an author or an animation production company.

The extraction configuration signal S1 is supplied from a control unit 54A (an example of operating unit) connected to the data reconfiguring unit 53. An input tool (an example of operating unit) is connected to the control unit 54A so as to output operation information D3 caused by operator's operation to the control unit 54A. The operation information D3 contains such data telling the apparatus 40 to extract original image information from a plurality of animation video image information D1i.

An extracted video image acquisition unit 61 and a stand-in data output unit 62 are connected to the data reconfiguring unit 53. At the extracted video image acquisition unit 61, the animation video image information D1i extracted by an operator is acquired one by one frames based on a video image acquisition signal S2. This video image acquisition signal S2 is directed to such a signal generated from the control unit 54A based on operation information D3 caused by the operator's operation to tell a monitor display based on the animation video image information D1i. At this extracted video image acquisition unit 61, a monitor or the like (not shown) is provided. The monitor displays the animation video image information D1i extracted by the operator to be checked.

At a stand-in data output unit 62, a stand-in video image information to be combined with the still-frame image information is provided so as to be output to a video image information combining unit 15 based on the stand-in video image output signal S3. The stand-in video image output signal S3 is directed to a signal generated from the control unit 54A based on the operation information D3 caused by the operator's operation so as to instruct the position or size of stand-in for writing character's words, for example.

The video image information combining unit 15 is connected to the extracted video image acquisition unit 61 and the stand-in data output unit 62. The animation video image information D1i and word video image information D2k are combined with each other based on a video image combining signal S4. The video image combining signal S4 is directed to a signal generated from the control device 54A based on operation information D3 caused by the operator's operation to instruct combination between the animation video image information Dli and word stand-in video image information D2k.

A special effect insert unit 71 is connected to the video image information combining unit 15, and special effect information is added to the still-frame image information DOUT based on an information adding signal S5, whereby a comic function effect is provided. The information adding signal S5 is directed to a signal generated from the control unit 54A based on the operation information D3 caused by the operator's operation to supply an instruction for improving a comic function effect such as character movement, enhancement of background image, addition of story properties, addition of book marks, momentous access of associated information or random access to a desired scene.

An image compressing unit 72 is connected to the special effect insert unit 71 so that the still-frame image information DOUT is encoded and compressed based on a compression control signal S6 in accordance with a desired compression system. This compression control signal S6 is directed to a signal generated from the control unit 54A based on the operation information D3 caused by the operator's operation in order to indicate a most advanced compression system such as ATRAC system or JPEG system and MPEG 1 to 4 systems with respect to the still-frame image information DOUT.

An organization processing unit 73 is connected to the image compression unit 72 so that compressed still-frame image information DOUT' is organized based on an organization output signal S7. The organization output signal S7 is directed to a signal generated from the control unit 54A based on the operation information D3 caused by the operator's operation in order to indicate an organization such as a series of comic, for example, issue 1 to issue M, with respect to still-frame image information DOUT'.

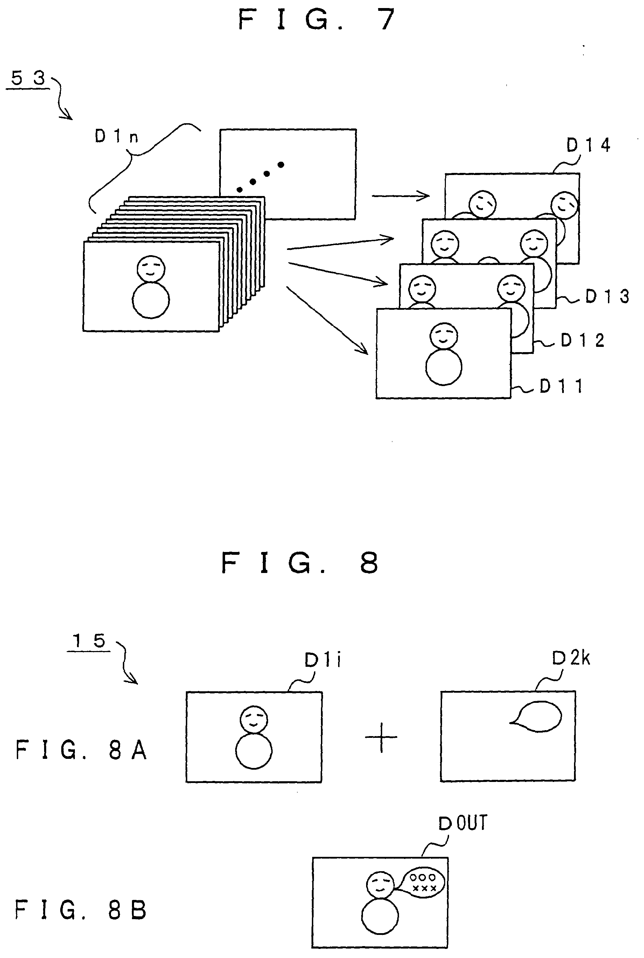

Now, an exemplary operation of an still-frame image generating apparatus 40 will be described here. Fig. 7 is an imaginary view showing an extraction example of the animation video image information D1i. Figs. 8A and 8B are imaginary views each showing a combination example of the animation video image and the word stand-in video image.

In this embodiment, for clarity, there is shown an example when four-frame animation video image D1i (i = 1 to 4) is extracted from an animation film base 52 of a snow man made of 'n' frames. In this example shown in Fig. 6, first, in the data reconfiguring unit 53 of the still-frame image generating apparatus 40, there is extracted animation video image information D11 of a first frame at which one snow man is drawn, for example, which is almost close to an original image, from an animation video image film base 52 of the snow man of frame 'n'. Similarly, there is extracted animation video image information D12 of a second frame at which two snow men are drawn, and thereafter, there is extracted animation video image information D13 at which three snow men are drawn. Then, there is extracted animation video image information D14 of a fourth frame at which three snow men are inclined to the right simultaneously.

When the animation video image information D1i of these four frames is extracted, word stand-in video image information D2k (k = 1 to 4) is combined with each of the animation video image information D1i by means of the video image information combining unit 15. At the combining unit 15, the animation video image information D1i and the word stand-in video image information D2k are combined with each other so as to produce a stand-in at the right from the mouse of the left snow man shown in Fig. 8A.

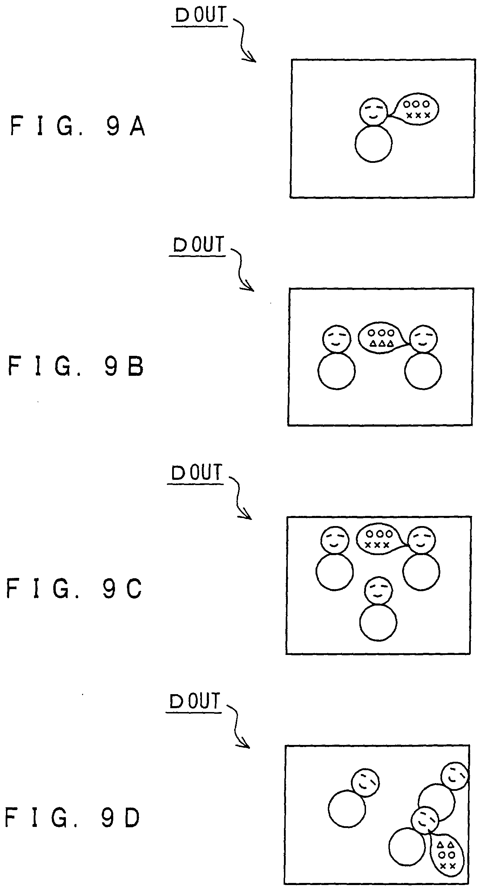

By this combining, there can be provided an still-frame image video image of which the snow man shown in Fig. 8B dubs a word OOOXXX. Assume a case where the still-frame image information DOUT consisting of a four-frame animation video image as shown in Figs. 9A to 9D is generated by repeating these processing functions.

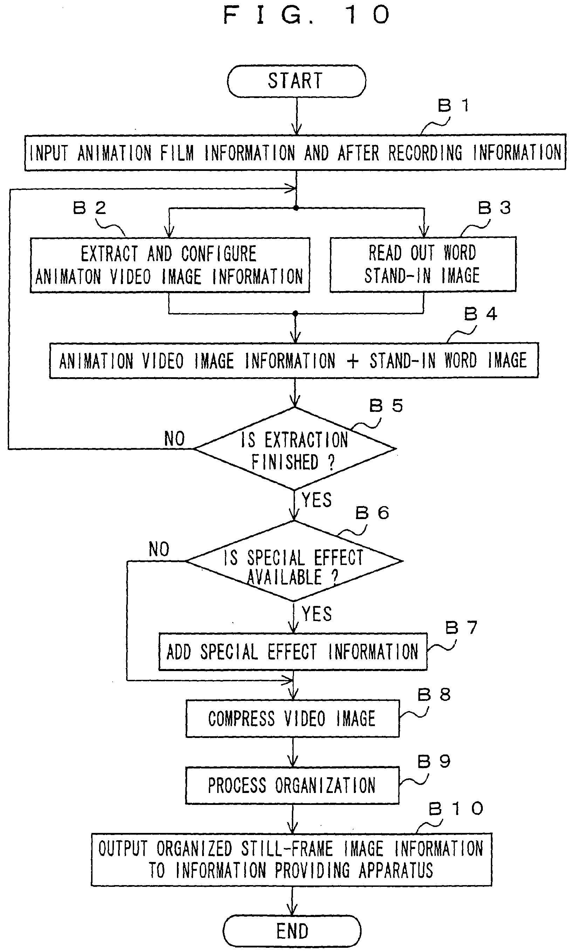

With this being presumed, first, at the step B1 of the flow chart shown in Fig. 10, an after recording database 51 and an animation film base 52 are input to the still-frame image generating apparatus 40. The operator operates the input tool 54B to allow the control unit 54A to be operated by inputting the operation information D3. Then, the animation video image information D1i (i = 1 to 4) or the voice information D2 are extracted from the after recording database 51 and animation video image film base 52 based on the video image extraction configuration signal S1 by means of the data reconfiguring unit 53 at the step B2 so as to configure them.

For example, the animation video image information D1i of the first frame at which one snow man almost close to an original image is drawn is extracted from the animation film base 52 of a snow man of frame 'n' shown in Fig. 7. Similarly, there is the extracted animation video image information D12 of the second frame at which two snow men are drawn, and thereafter, there is extracted the animation video image information D13 at which three snow men are drawn. Then, there is extracted animation video image information D14 of the fourth frame at which three snow men are inclined to the right simultaneously. At the extracted video image acquisition unit 61, the animation video image information D1i extracted by the operator is acquired one by one based on the video image acquisition signal S2, and is displayed on a monitor or the like (not shown).

In parallel to this, at the step B3, the stand-in video image is read out of the stand-in data output unit 62. The stand-in data output unit 62 is intended to output the stand-in video image to be combined with an animation video image information to the video information combining unit 15 based on the stand-in video image output signal S3. An operator operates the input tool 54B to input the operation information D3 to the control unit 54A. The control unit 54A is intended so as to change the position or size of a stand-in for writing a word for an animation video image information of a snow man in accordance with the operator's input instruction.

When four-frame animation video image information D1i and the word stand-in image information are determined, the animation video image information D1i and the word stand-in image information D2k (k = 1 to 4) are combined with each other so as to produced a stand-in shown at the right from the mouse of the left snow man at left side shown in Fig. 8A. By this combining, there can be provided the still-frame image information of which the snow man shown in Fig. 8B dubs OOOXXX.

At the step B5 of performing these processing functions, it is judged whether or not all the word stand-in video image information D2k are combined for the extracted components of the animation video image information D1i. In the case where the word stand-in video image information D2k is not combined for all of the extracted components, it reverts to the step B2 and B3 at which the above processing functions are repeated. In this manner, there can be generated the still-frame image information DOUT that consists of four-frame animation video images as shown in Figs. 9A to 9D.

In this embodiment, when the snowman of the first frame dubs a word OOOXXX, two snowmen of the second frame shown in Fig. 9B appear. When one of these snowmen dubs a word XXX Δ Δ Δ, three snowmen of the third frame shown in Fig. 9C appear. When one of these three snow men dubs a word □ □ XX, there is produced a video image such that three snow men of the fourth frame shown in Fig. 9D fall to the right simultaneously, the video image being produced so that one of these snow men dubs Δ Δ OOXX. An end flag may be set to the last animation video image frame information. This is because an information processing device is capable of performing frame advancing control based on such end flag.

Thereafter, processing goes to the step B6 at which it is judged by the control unit 54A whether or not an instruction for special effect processing is supplied from an operator. When such instruction for special effect processing is supplied, it goes to the step B7 at which special effect information is added to the still-frame image information DOUT based on an information adding signal S5 by means of the special effect insert unit 71. In this manner, there can be enhanced comic function effects such as movement of snow men, enhancement effect of background image, addition of story properties in a four-frame animation video image, addition of book mark, momentary access to associated information, or random access to a desired scene.

Then, processing goes to the step B8 at which the still-frame image information DOUT is encoded and compressed by means of the image compressing unit 72 based on the compression control signal S6 in accordance with a desired compression system. Thereafter, processing goes to the step B9 at which the compressed still-frame image information DOUT' is organized by the organization processing unit 73 so as to produce a series of comic, for example, issue 1 to issue M, based on the organization output signal S7. Of course, a production and editing process is also performed such that these items of the still-frame image information DOUT' are inserted into the data processing broadcasting programs. Then, processing goes to the step S10 at which the still-frame image information DOUT after organized is output to the information providing apparatus 19.

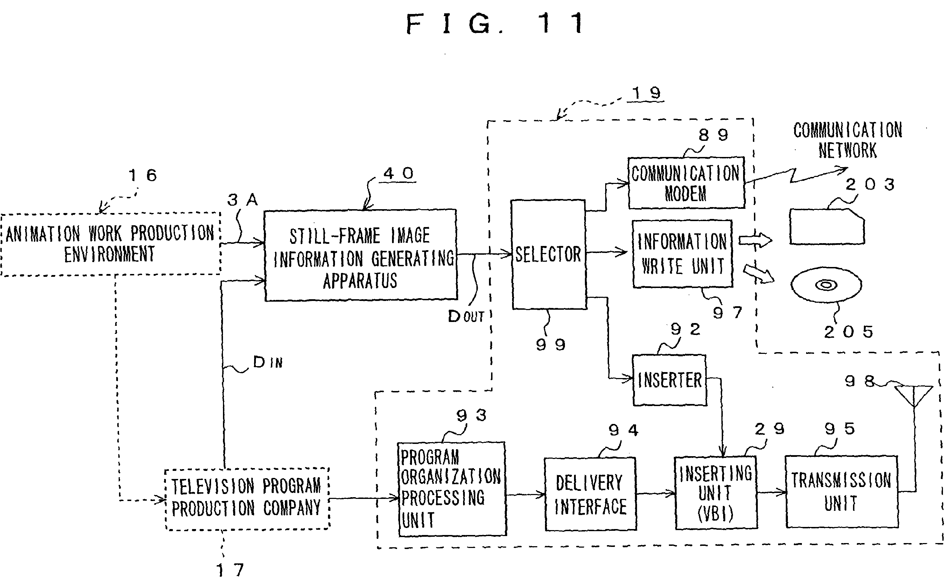

Now, an example of an internal configuration of an information providing apparatus 19 provided at a broadcasting station 9 or the like will be described here. Fig. 11 is a block diagram showing an exemplary configuration of the information providing apparatus 19 and its peripheral systems. In this embodiment, it is assumed that the information providing apparatus 19 is installed at a single information providing entity.

According to the information providing apparatus 19 shown in Fig. 11, apart from TV program broadcasting using general ground waves, the still-frame image information DOUT after organized, which has been acquired from the still-frame image generating apparatus 40, is bit assigned to users Hj by utilizing the existing broadcasting infrastructure. The information is bit assigned by utilizing the existing communication infrastructure, or the information is produced as package media such as animation memory card 203 or CD-ROM 205 so as to be provided to users Hj. A video image film 3A is carried into the still-frame image generating apparatus 40 from animation work production environment 16, and the dynamic image element information DIN is carried from a television program production company.

Of course, a variety of duties may be shared by joint companies by bit assignment using a communication modem 89 and by dividing three functions for sales caused by package media. A selector 99 is provided at the information providing apparatus 19 shown in Fig. 11 so as to distribute the still-frame image information DOUT after organized from the still-frame image generating apparatus 40 into three output modes. In a first output mode, the communication modem 89 is connected to the selector 99 so that the still-frame image information DOUT is bit assigned to users Hj via a communication line.

In a second output mode, an information write unit 97 such as ROM writer is connected to the selector 99 so as to record the still-frame image information DOUT in an animation memory card 203 or CD-ROM 205 that is an example of recording medium.

Namely, the memory card 203 or CD-ROM 205 records still-frame image information (electronic information contents) which is created as a comic strip from an already broadcast or shown animation work. This still-frame image information DOUT is generated by reconfiguring the dynamic image element information DIN or the animation video image information D1i arbitrary extracted from the video image film 3A into a still image based digital video image, and then, the word stand-in video image D2k is combined with the still-frame image information DOUT. These electronic animation package contents are provided so as to be sold to users Hj through the existing sales infrastructure.

In a third output mode, the still-frame image information DOUT is organized in a predetermined data format, and is constructed in a group of data rows. Thereafter, the information is multiply transmitted to the information processing nit 8 of users Hj using the existing broadcasting infrastructure. Namely, at the information providing apparatus 19, apart from the communication modem 89, the information write unit 97, and the selector 99, there are provided an inserter 92 for inserting a data broadcast program; an insert unit 29, a program organization processing unit 93 or delivery interface 94 for general television programs; a transmission unit 95; and an antenna 98. The inserter 92 is connected to the above described selector 99.

Television program information and commercial videos caused by ground wave broadcasting are provided by a television program production company 17. These television program information and commercial videos are sent to a delivery interface 94 after organized by the program organization processing unit 93. At the delivery interface 94, the program organized television program information and commercial videos are provided as a television broadcasting signal caused by ground wave broadcasting after converted in a predetermined broadcast form.

An insert unit 29 is connected to an output stage of this delivery interface 94, and a transmission unit 95 is connected to its later stage so that the still-frame image information DOUT on a groups of data is multiply transmitted by means of an insert unit (VBI) 29 during a vertical blanking period of the above described television broadcast signal. Then, the still-frame image information DOUT is provided so as to be broadcast at a predetermined date and time (midnight).

A group of data rows caused by this insert unit 29 is irradiated from an antenna 98 with predetermined transmission power after modulated by a predetermined modulation system. At a hand held terminal device 14 or the like with its tuner function possessed by users Hj receiving this group of data rows, the group of data rows may be received simultaneously within a predetermined period. The still-frame image information DOUT acquired from the television broadcast signal can be stored on a storage device or the like in all. Therefore, the users Hj can enjoy a still-frame image in unreal time irrespective of a television broadcast time by reading out data rows from the storage device anytime he or she like after receiving the information.

In addition, according to the information providing apparatus 19, the still-frame image information DOUT is recorded on an animation memory card 203 or CD-ROM 205 by mans of an information write unit 97 so that these electronic animation package contents are provided to users Hj using the existing sales infrastructure.

Therefore, an unsold stock problem with comic books or the associated return processing problem or the like. that has been the most difficult in a book distribution process can be solved completely. In particular, smaller, light package media can be distributed by using a recyclable nonvolatile semiconductor memory with respect to the electronic animation package contents. Moreover, a conventional problem with recollection of old read comic books can be solved.

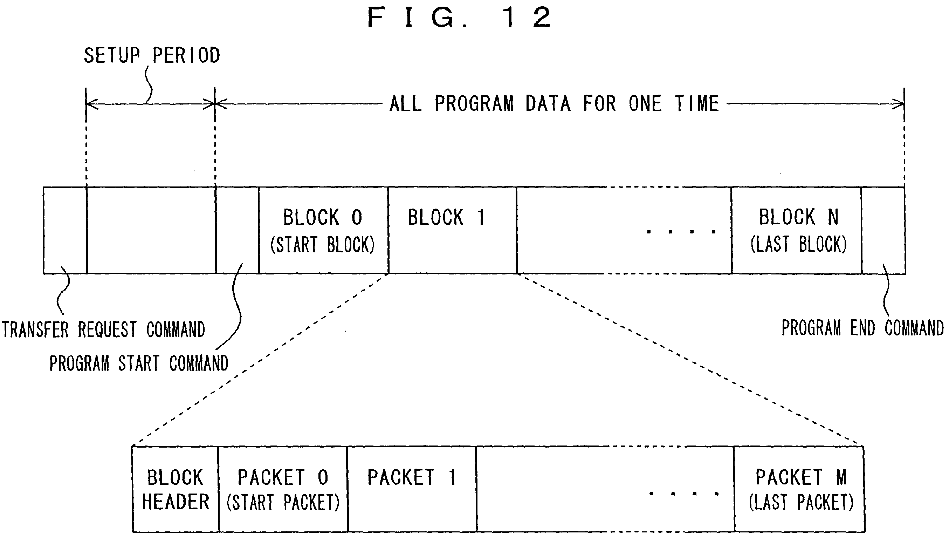

Now, a format of data rows applied in the business model 20 will be described here. With respect to data rows of the still-frame image information DOUT shown in Fig. 12, a format used at the broadcast station 9 or the like is provided in advance, and a data main body is transmitted to be divided into packets. In this embodiment, even at midnight, a transfer request command is described at the beginning of data rows so as to enable automatic reception in the information processing device 8. This transfer request command is directed to data for initializing (starting up) an information processing device such as hand held terminal device 14 in a standby state. A dummy packet is inserted after this transfer request command. This dummy packet is provided so as to form a setup period. The setup period used here denotes a time required for the hand held terminal device 14 to enable reception.

After this setup period, all the program data for count I are described. The program data is described in a bit data format, and the still-frame image information DOUT is targeted for such description. The program data is described indiscriminately of nominal header information, still-frame image information DOUT or program codes, video image information D1i and voice information D2.

A program start command is described at the beginning of the program data, and then, N+ 1 blocks, i.e., block 0 to block N are described. The above described header information, still-frame image information DOUT or program codes, video image information D1i, and content codes of voice information D2 are described in units of block. Block 0 corresponds to a start block, and block N corresponds to a last block.

A program end command is described after block N. A block header is described at the beginning of each of the blocks 0 to N, for example, block 1. At the block header, there are described a header code, attributes such as the start, middle, and end of the block, block length such as number of packets, or content codes.

After this block header, M+1 packets are described for each block. Packet 0 corresponds to a start packet, and packet M corresponds to a last packet. At each of the packets 0 to M, for example, at packet 1, apart from main body data, there are described a packet code, attributes such as the start, middle, and end of the packet, and a parity error correction code or the like.

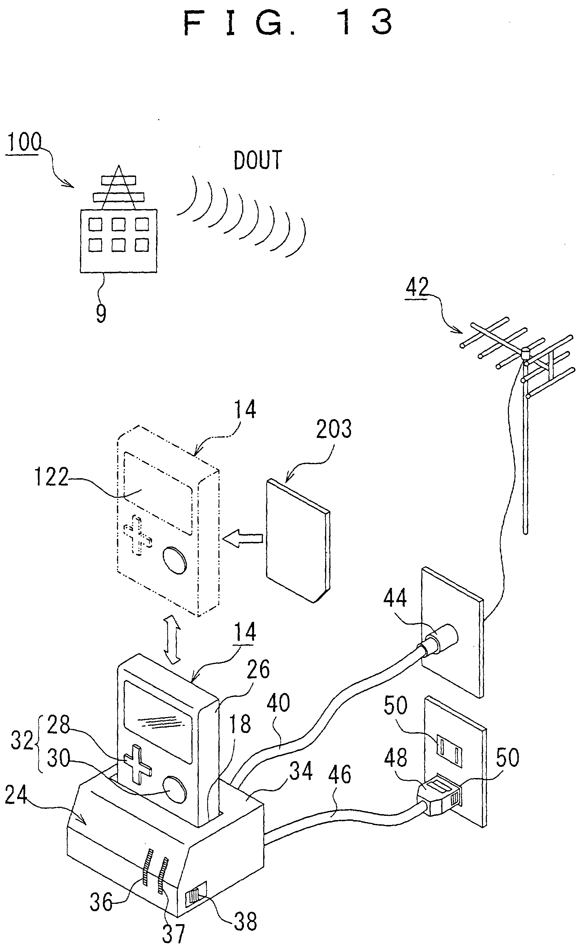

Fig. 13 is an imaginary view showing an exemplary configuration of a still-frame image service system 100 according to a first embodiment.

In this system 100, an information processing device is provided with a tuner function with its charge function shown in Fig. 13 and a hand held terminal device 14 provided removably from this tuner device 24. The still-frame image information DOUT, which is created from an animation work as a comic strip, is received from a broadcast station 9. Alternately, the still-frame image information DOUT is read out and processed from an animation memory card (cell cassette) 203. This animation memory card 203 is provided as an example of recording medium, a nonvolatile semiconductor memory such as flash memory may be used, and a memory card type or a ROM cassette type may be applied.

In this system 100, the animation memory card 203 is loaded on a hand held terminal device 14 so that the user enjoys a still-frame image by using a liquid crystal display monitor 122 and an operation button. In addition, there is read out the still-frame image information DOUT that has been downloaded in advance to the hand held terminal device 14 so that its image or voice is viewed and heard. At this time, a comic video image is frame advanced at a predetermined frame advancing speed. The frame advancing speed of the frame image is set by an operation key 32 that is provided as an example of the setting unit.

In order to download data from the tuner device 24 to the hand held terminal device 14, there is used a general-purpose serial interface (wired and wireless) such as USB or IEEE 1394 and IrDA. Otherwise, a wired or wireless dedicated interface or the like for directly connecting a connector may be provided at the tuner device 24. Data rows received by the tuner device 24 may be directly stored on a nonvolatile memory incorporated in the hand held terminal device 14 or a hard disk device without being stored on the device.

The hand held terminal device 14 shown in Fig. 13 has an operation key 32 and a liquid crystal display monitor 122 for displaying a video image operated by this operation key 32. The liquid crystal display monitor 122 has a 320 x 240 pixel color liquid screen, for example. The lower end side of this hand held terminal device 14 is inserted into a recess 18 of the tuner device 24 so that charging is performed for a secondary battery incorporated in this hand held terminal device 14. In addition to the above described liquid crystal display monitor 122, a cross key 28 configuring the operation key 32 and an OK key 30 are provided at a casing 26 of the hand held terminal device 14. The OK key 30 also functions as a power switch of the hand held terminal device 14, as described later.

On the other hand, at a casing 34 of the tuner device 24, in addition to the above recess 18, there are provided: a charge display lamp 36 for displaying a charge state such as charging or the end of charging; a reception display lamp 37 for displaying that the hand held terminal device 14 is in data reception; and a channel selection switch 38 for selecting a desired broadcast channel in data broadcasting.

Further, a coaxial cable 40 is connected to this tuner device 24 with its charge function, and reaches a coaxial terminal 44. An antenna 42 is connected to this coaxial terminal 44 so that a data broadcast program and the still-frame image information DOUT are received in addition to general ground wave television program broadcast. In addition, an AC plug (alternating plug) 48 to which a power code 46 is connected is provided at the tuner device 24. The AC plug 48 is connected to a power receptacle 50, and AC power is supplied.

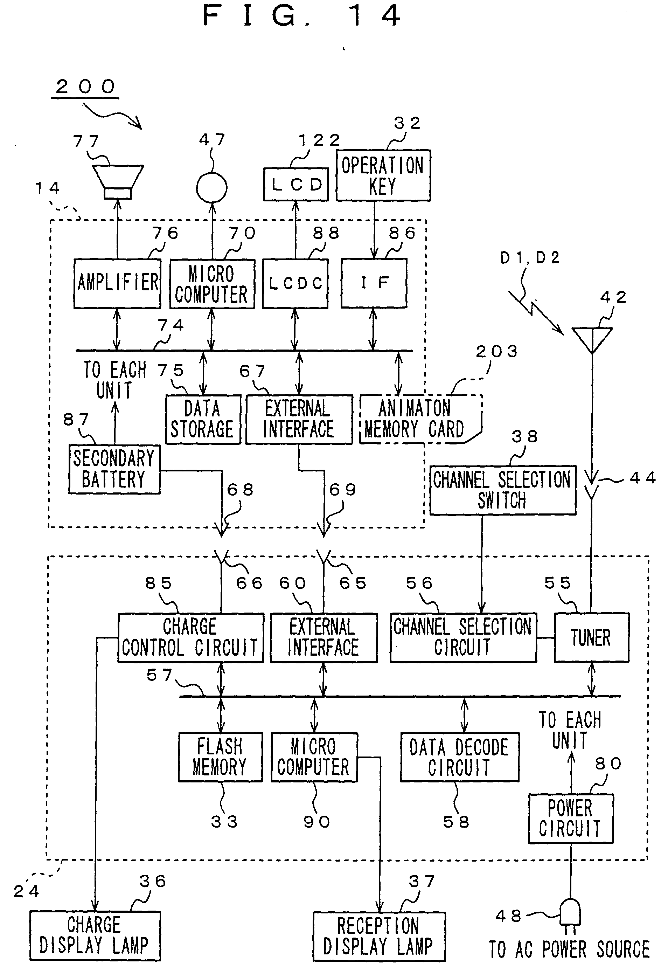

Fig. 14 is a block diagram depicting an example of an internal configuration of a tuner device 24 with its charge function used in the system 100 and the hand held terminal device 14. In Fig. 14, the tuner device 24 has a tuner 55 for receiving data to be externally supplied. This tuner 55 is provided so as to extract data rows such as the still-frame image information DOUT from a ground wave broadcast signal received by an antenna 42 and sent them to a bus 57. A flash memory 33, which is provided as an example of storage device, is provided in the tuner device 24 so that the data rows transferred from the bus 57 are stored.

In this embodiment, a video image and voice information D2 associated with a data broadcast program or still-frame image information DOUT is multiplied by utilizing VBI (vertical blanking interleaving interval) that is a gap of a broadcast electronic wave in accordance with an NTSC system that is a ground wave television broadcast. Various digital contents (the contents used here contain a variety of information such as video image, an image (dynamic image or still image), voice, characters, numerals or a program reproduced by a television receiver or a radio receiver or contents of CM and journal or newspaper) can be distributed. Therefore, the ground wave television broadcast electric waves can be received by means of the antenna 42 such as conventional Yagi antenna.

The television broadcast waves contain electric waves of a plurality of channels. Then, in order to select and receive a desired channel, embodiments of this invention are configured so that the selection frequency of the tuner 55 can be switched through a channel selection circuit 56 based on the channel information set by a channel selection switch 38. The data rows (here, NTSC signal) selected by the tuner 55 and distributed to the bus 57 are decoded by means of a data decode circuit 58. Namely, a comic video image is displayed based on the still-frame image information DOUT after expanded by means of the data decode circuit 58.

When data rows associated with the still-frame image information DOUT multiplied to VBI at the broadcast station 9 exist in an NTSC signal, the decoded video image and voice information D2 and the still-frame image information DOUT are temporarily stored on a flash memory 33 including a case in which the hand held terminal device 14 is not set under the control of a microcomputer 90 that is provided as an example of control device. When the hand held terminal device 14 is set, the still-frame image information DOUT may be transferred simultaneously to the hand held terminal device 14 through an external interface 60 that is a serial interface or a connection terminal 65. The microcomputer 90 and the data decode circuit 58 may be provided as an integrated system LSI.

A removable hand held terminal device 14 is set to this tuner device 24 so as to download the still-frame image information DOUT stored on the flash memory 33. The hand held terminal device 14 has a bus 74. To this bus 74, there are connected an external interface 67, a microcomputer 70, a data storage 75, an amplifier 76, an interface 86, and a liquid crystal display controller (LCDC) 88. The animation memory card 203 is loaded to the bus through a connection terminal (not shown).

The data rows sent to the hand held terminal device 14 through the connection terminal 65 of this tuner device 24 are electronically written into the data storage 75. That storage is provided as an example of storage device under the control of the microcomputer 70. The microcomputer is provided as an example of control device through a connection terminal 69 of this hand held terminal device 14, the external interface 67 that is a serial interface, and a bus 74.

When a display using bit assignment is selected, the microcomputer 70 reads out the still-frame image information DOUT stored on a data storage 75 so as to display and control a still-frame image. When package contents are selected, this microcomputer reads out the still-frame image information DOUT from the animation memory card 203 so as to display and control a still-frame image.

In this data storage 75, a read only memory (EEP ROM) or the like capable of writing and erasing information may be used. In this embodiment, even if the hand held terminal device 14 is not set to the tuner device 24, the data rows are provided so as to be electrically stored in the flash memory 33. When the hand held terminal device 14 is set to the tuner device 24, the data rows are transferred to the data storage 75 of the hand held terminal device 14 upon the receipt of control of the microcomputer 90.

As the storage capacitance of a flash memory 33 or a data storage 75, in the case where a data rate of data broadcast is about 40 [kbps], if an attempt is made to store at least the data for about 50 minutes, 16 [MB] may be employed (40 [kbps] / 8 [bits] x 50 [min] x 60 [sec] = 15 [MB]).

The microcomputer 70 is a digital computer and provided to arbitrarily image and process the still-frame image information DOUT read out of the data storage 75 or image and process the still-frame image information DOUT read out of the animation card 203. The microcomputers 70 and 90 each has a CPU (central processing unit), a ROM (including EEPROM) that is a memory, a RAM (random access memory), an input / output interface, a clock that is clock means, and a timer that is timer means. They function as a control unit, a computation unit, a processing unit or the like. Therefore, as described above, it is possible to execute functions of a data decode circuit 58 by means of the microcomputer 90.

The reception display lamp 37 is connected to the microcomputer 90 at the tuner device 24 side. This reception display lamp 37 is controlled so that the lamp is turned ON during data transfer from the tuner device 24 to the data storage 75 and during data storage to the data storage 75, and the lamp goes off in the other case. The reception display lamp 37 may be blinked by the completion of data row reception.

This tuner device 24 further has a power circuit 80. This power circuit 80 converts to a direct current voltage a alternating current voltage such as 100 VAC supplied from an external AC power, and supplies the converted voltage to all blocks in the tuner device 24. In this case, a charge control circuit 85 converts a direct current voltage supplied from a power circuit 80 into a charging direct current, for example, and supplies the converted current to a secondary battery 87 of the hand held terminal device 14 through a connection terminal 66 via a connection terminal 68 of the hand held terminal device 14, thereby controlling charging. Charge control included in the charge control circuit 85 controls a charge current while detecting the temperature of the secondary battery 87, and performs residual quantity detection control and no-charge detection control or the like of the secondary battery 87. As the secondary battery 87, a lithium ion battery or nickel hydrogen battery and the like can be used.

The charge display lamp 36 is connected to the charge control circuit 85. This charge display lamp 36 is controlled so that the lamp is turned ON while the secondary battery 87 is in charging and so that the lamp is turned OFF while in no-charge. Further, the operation key 32 is connected to the hand held terminal device 14 via an interface 86, and a liquid crystal display monitor 122, which is provided as an example of display unit, is connected to the bus 74 via a liquid crystal display controller 88. The operation key 32 is operated when the still-frame image information DOUT is input or is operated when a frame advancing speed is set. Information concerning the frame advancing speed is notified to the controller 88, which is provided as an example of control device. Therefore, in the liquid crystal display monitor 122 displayed and controlled by means of the controller 88, frame video images can be advanced one by one frames at a frame advancing speed previously set by means of the operation key 32. A voice processing unit 76 is connected to the above described bus 74 so that voice amplification processing is done. A speaker 77 is connected to the voice processing unit 76 so as to output voice information D2 concerning the data broadcast program or the still-frame image information DOUT.

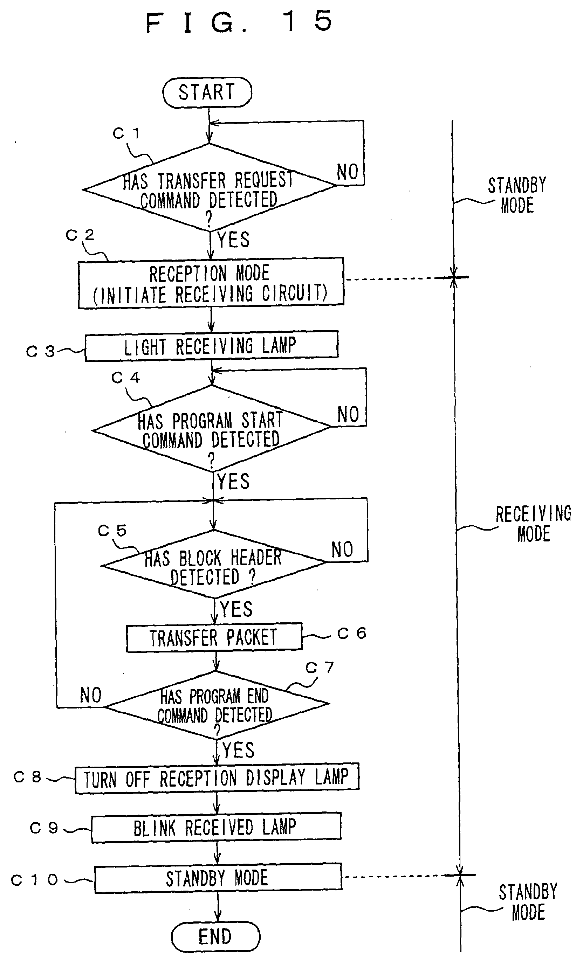

Now, exemplary processing in a still-frame image service system 100 will be described here. Fig. 15 is a flow chart showing an example of operation during reception of a tuner device 24. In this example, the still-frame image information DOUT is provided as data rows so that the data rows are distributed from a broadcast station 9 to users Hj. The still-frame image information DOUT is software (data) which is created from an already broadcast or shown animation work as a comic strip.

In this example, the hand held terminal device 14 is set to the tuner device 24. While the tuner device 24 waits for data download, the tuner device 24 enters a standby mode. Here, the standby mode denotes a state in which the microcomputer 70 and a system LSI such as the LCDC 88 of the hand held terminal device 14 is powered OFF except for the interface function between the tuner device 24 and the microcomputer 90 and clock function.

In this interface function as well, unlike general data transfer, a startup command from the microcomputer 90 is capable of polling at the required minimum low speed. In the tuner device 24, power is supplied from a power circuit 80 to each unit to detect a transfer request command. In addition, the hand held terminal device 14 is set to the tuner device 24. Thus, a secondary battery 87 is charged by means of a charge control circuit 85 during this period.

With this being presumed, in the tuner device 24, during a standby mode, a transfer request command transmitted from the broadcast station 9 is detected at the step C1 of the flowchart shown in Fig. 15. When the transfer request command is detected by the tuner device 24, a transfer request command for notifying the download start from the tuner device 24 to the hand held terminal device 14 is transferred. Thus, in the hand held terminal device 14, by utilizing a setup period, the microcomputer 70 itself initiates the hand held terminal device 14 in a receiving mode at the step C2.

The receiving mode used here denotes an intermediate mode between a standby mode and a normal (normal use) mode. As the microcomputer 70, in addition to the standby function, a high-speed interface function associated with the tuner device 24, and an external memory interface function for transferring the acquired data to the data storage 75 such as flash memory are further turned ON. Therefore, during this period, power is supplied from a secondary battery 87 to the data storage 75 and microcomputer 70 or the like.

Thereafter, processing goes to the step C3 at which a reception display lamp 37 indicating that data rows are in receiving is lit by the microcomputer 90 of the tuner device 24. The charge display lamp 36 is turned ON because the hand held terminal device 14 is set to the tuner device 24. The hand held terminal device 14 waits for a program start command from the tuner device 24.

Then, at the step C4, it is detected by the microcomputer 90 whether or not a program start command is described with respect to the data rows following the setup period. This program start command is a signal for notifing that transfer of all the programs downloaded once is started. All the program data is divided into plurality of blocks, as described in Fig. 12. Therefore, when the block start command is received (detected), it goes to the step C5 at which it is detected whether or not a block header is described in packet of a first (beginning) block 0.

When this block header is detected, it goes to the step C6 at which the packet shaped data groups are finely divided in blocks, and packet transfer processing is executed while handshake is taken with respect to the packet shaped data groups by the microcomputers 70, 90. Namely, when the tuner device 24 receives data rows, the data rows are decoded as binary data by means of a data decode circuit 58.

Then, the still-frame image information DOUT that is a decoded data file is transferred to a flash memory 33 or the like, and is temporarily stored thereon. In this example, the decoded data file is transferred simultaneously to the flash memory 33 and the storage 75 of the hand held terminal device 14. Thus, even if users Hj fail to set the hand held terminal device 14 to the tuner device 24, a data file can be re-transferred from the tuner device 24 to the hand held terminal device 14.

An end flag indicating the end of the block is described at the end of this block. Thus, when the microcomputer 70 recognizes this flag, it goes to the step C7 at which it is detected whether or not a program end command following the block end flag is described. When the program end command is not detected, it reverts to the step C5 at which it is detected whether or not the next block header is continuously described.

In this way, data files are transferred from the tuner device 24 to the data storage 75 one after another until the program end command is detected. When all the data rows can be temporarily recorded on a flash memory 33 or data storage 75 according to a buffer memory in the microcomputer 70, it goes to the step C8 at which the reception display lamp 37 of the tuner device 24 is turned OFF by the microcomputer 90. A "receiving" indicator 47 of the hand held terminal device 14 is turned OFF by means of the microcomputer 70, which received program end command.

Thereafter, processing goes to the step C9 at which a "received" lamp blinks at the tuner device 24 and the hand held terminal device 14. The "received" lamp may be compatible with the reception display lamp 37 or "receiving" indicator 47. Then, processing goes to the step C10 at which the hand held terminal device 14 enters a standby mode.

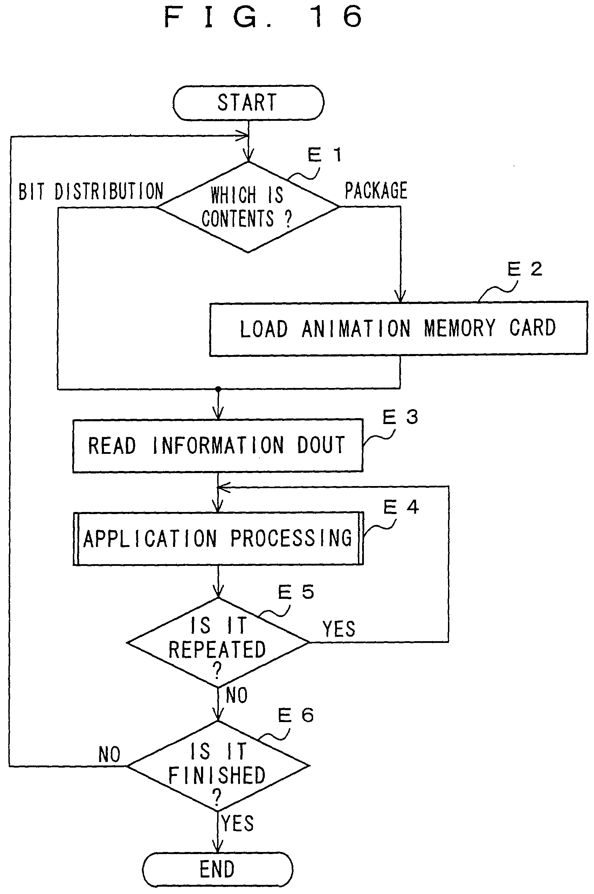

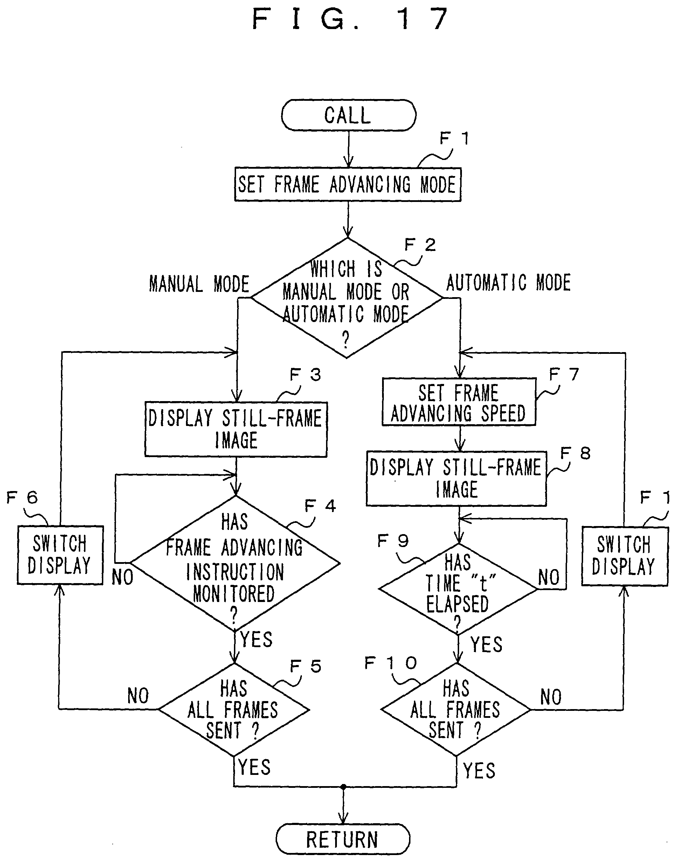

Fig. 16 is a flow chart (main routine) showing an exemplary processing during reproduction in the hand held terminal device 14. Fig. 17 is a flow chart (subroutine) showing the exemplary application processing.

In this example, the still-frame image information DOUT is data processed while the hand held terminal device 14 is removed from the tuner device 24, Then, assume that there is provided a content selection mode for selecting any of the still-frame image information DOUT using bit assignment or the still-frame image information DOUT based on package contents, and there is set an auto mode or a manual mode for frame advancing. The auto mode denotes an operation for automatically advancing a still-frame image at a predetermined frame advancing speed, and the manual mode denotes an operation for arbitrarily advancing a still-frame image.

With these being presumed, at the step E1 of the flow chart shown in Fig. 16, the microcomputer 70 executes data processing based on a content selection mode. Here, a user set a content selection mode to package contents. At the step E2, the animation memory card 203 is loaded on a hand held terminal device 14. In this manner, in the hand held terminal device 14, it is detected by a known method that the animation memory card 203 has been loaded on the hand held terminal device 14.

By the trigger of above detection, the still-frame image information DOUT is read out of the animation memory card 203 at the step E3 in the microcomputer 70. When the content selection mode is set to the contents based on bit distribution at the Step E1, it jumps to the Step E3 at which the still-frame image information DOUT based on bit distribution is read out of the data storage 75.

For example, after a subroutine in Fig. 17 has been called, a frame advancing mode is set to the microcomputer 70 at the step F1. The frame advancing mode is provided to be set by the user using the operation key 32. For example, at the step F2, when the manual mode is set, a still-frame image is displayed at the step F3. Next, at the step F4, it is monitored whether or not a frame advancing instruction is supplied. Frame advancing is performed by the user anytime. When the frame advancing instruction is supplied, it goes to the step F5. When the frame advancing instruction is not supplied, the still- frame image is continuously displayed.

At the step F5, it is judged whether or not all the frames have been sent. Whether or not all the frames have been sent is detected by detecting an end flag added to the last animation video image frame information in advance. When all the frames are not sent, it goes to the step F6 at which a display is switched so as to advance one frame. At the step F3, the still-frame image is displayed. At the step F4, a frame advancing instruction is continuously monitored. At the step F5, when all the frames are sent, it returns to the step E4 of the flow chart shown in Fig. 16.

In addition, when an auto mode is set at the step F2, the frame advancing speed is set at the step F7, and a still- frame image is displayed at the step F8. A selection of one frame per minute or one frame per second or the like is provided in advance for a frame advancing speed so that the user can select it. Of course, a frame advancing speed is provided so that the speed can be continuously varied, and the setting can be varied freely even during frame feeding.

When this still-frame image is displayed, it goes to the step F9 at which a timer is started up, and it is monitored whether or not 't' seconds or 't' minutes (hereinafter, referred to as a video image display time 't') have elapsed. When the video image display time 't' has elapsed, it goes to the step F10. When the video image display time 't' has not elapsed, the still-frame image is continuously displayed.

At the step F10, it is judged whether or not all the frames have been sent as in a manual mode. When all the frames have not been sent, it goes to the step F11 at which a display is switched so as to advance one frame. At the step F7, after the animation video image has been displayed, the video image display time 't' is continuously monitored at the step F9. when all the frames have been sent at the step F10, it returns to the step E4 of the flow chart shown in Fig. 15.

When application processing terminates at the step E4, it goes to the step E5 at which it is judged whether or not data processing associated with the still-frame image information DOUT is repeated. Upon this judgment, the user uses the operation key 32 for the microcomputer 90 so as to instruct whether or not repetition is executed. When an instruction for executing repetition is supplied, it goes to the step E4 at which the application processing is executed. When a non-execution instruction associated with the still-frame image information DOUT is supplied, it goes to the step E6. At the step E6, it is judged whether or not data processing is terminated in the hand held terminal device 14. At this time, the microcomputer 70 detects power OFF information, and terminates data processing. At this time, when data processing is not terminated, it reverts to the step E1 at which the microcomputer 70 executes data processing based on the content selection mode. This is because the users enjoy a still-frame image by changing contents.

In this way, in a still-frame image service system 100 according to a first embodiment, the still-frame image information DOUT to be created from an animation work as a comic strip can be processed. Moreover, a liquid crystal display monitor 122 is displayed and controlled so as to frame advance a still-frame image of a snow man shown in Figs. 9A to 9D or the like at a predetermined frame advancing speed.

Therefore, unlike a conventional comic book, automatic frame advancing can be achieved according to the pace of users Hj without turning pages. In this manner, operability and convenience associated with the still-frame image processing can be remarkably improved.

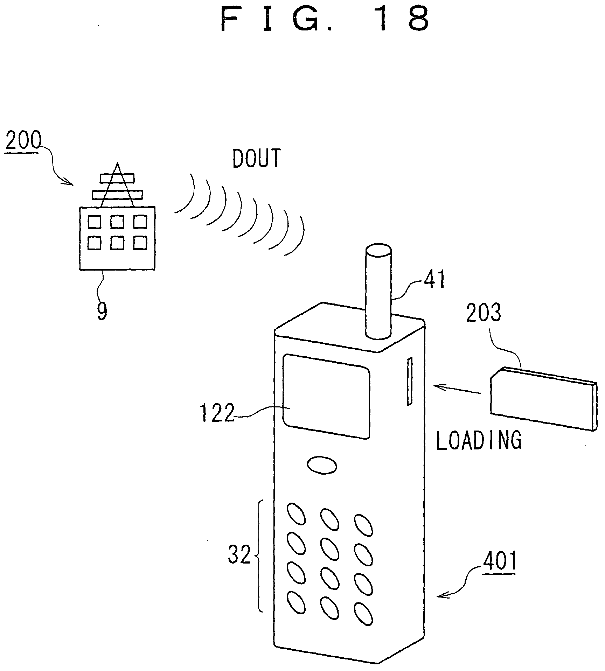

Fig. 18 is an imaginary view showing an exemplary configuration of a still-frame image service system 200 according to a second embodiment.

In this system 200, there is provided a hand held terminal device 401 with its tuner device function as shown in Fig. 18, which is provided as an example of information processing device, so that the still-frame image information DOUT can be directly received at the outside through a rod antenna 41 from the broadcast station 9 or the like and stored on a nonvolatile memory.

Of course, the video image voice information D2 concerning a data broadcast program is also received at the hand held terminal device 401. Users Hj views the still-frame image information DOUT downloaded from the broadcast station 9 at intervals of data broadcast reproduction or a game. In addition, the users can enjoy anywhere and anytime the still-frame image information DOUT caused by the animation memory card 203 removably provided relevant to the hand held terminal device 401.

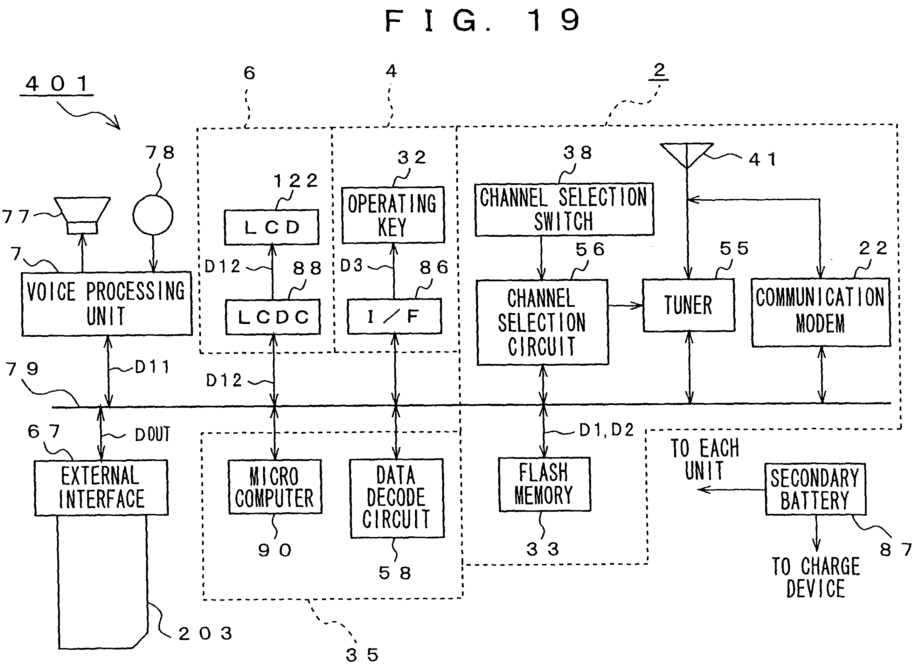

Now, an example of an internal configuration of a hand held terminal device 401 with its tuner function will be described here. Fig. 19 is a block diagram depicting an example of an internal configuration of a hand held terminal device 401 used in the still-frame image service system 200. Like reference numbers and names in the first embodiment are not described here because their functions are similar.

A hand held terminal device 401 shown in Fig. 19 is provided as an example of information processing device that processes the still-frame image information DOUT from the broadcast station 9 and the still-frame image information DOUT from the animation memory card 203, and has a system bus 79. In this system bus 79, there are connected an operating unit 4, a display unit 6, a voice processing unit 7, a data processing unit 35, an external interface 67, and a receiving unit 204 or the like, and these elements are driven by a secondary battery 87.

An animation memory card 203 is loaded on this external interface 67, and the still-frame image information DOUT to be created from an animation work as a comic strip is read out. A nonvolatile semiconductor memory such as recyclable flash memory is used for the animation memory card 203. The receiving unit 204 has a tuber 55, a communication modem 22, a channel selection switch 38, a channel selection circuit 56, and a flash memory 33, where the still-frame image information DOUT from the broadcast station 9 is received by means of the tuner 55 so that the still-frame image information DOUT is stored on the flash memory 33. If there is sufficient memory capacity, a video image and voice information D2 after the still-frame image information DOUT has been decoded may be stored on a flash memory 33.

In this example, the data processing unit 35 has a data decode circuit 58 and a microcomputer 90, where the still-frame image information DOUT stored on the flash memory 33 is read out and processed or the animation memory card 203 is mounted so as to process the still-frame image information DOUT. The interface (I/F) 86 that configures the operating unit 4 is connected to this system bus 79, and the operating key 32 is connected to this interface 86. The operating key 32 is operated to control the data decode circuit 58 and the microcomputer 90.

Further, the controller (LCDC) 88 constructing display unit 8 is connected to the system bus 79 and a liquid crystal display monitor 122 is connected to this controller 88 so as to display a still-frame image caused by the still-frame image information DOUT operated by the operating key 32 (refer to Figs. 9A to 9D). In this example as well, when data rows are transmitted by the existing broadcasting infrastructure, the data rows multiplied during a vertical blanking period for a data broadcast signal adopted in that broadcasting infrastructure are received in the tuner 55 so that the data rows are downloaded in the flash memory 33.

In a voice processing unit 7, the voice information D2 associated with the still-frame image information DOUT is reproduced and amplified, and a voice signal is output to a speaker 77. In the case where this unit is provided with a hand held telephone set, it functions as a telephone receiver. A microphone 78 is connected to this voice processing unit 7 so as to function as a telephone transmitter in the case where the microphone is provided with its hand held telephone function.

In addition, when a communication modem 22 is connected to Internet, telephone line or satellite line and the like, and the still-frame image information DOUT is provided by utilizing the existing communication infrastructure or during settlement of charged contents, a group of data rows received by these communication lines is temporarily stored on the flash memory 33. In the case of configuring a simple hand held terminal device such as hand held radio having only a function of the tuner, a communication modem 22 may be eliminated. In contrast, in the case of configuring a hand held information terminal device having its telephone function, the communication modem 22 is preferably provided.

### [Copy Right and Address of Contact Right thereof]

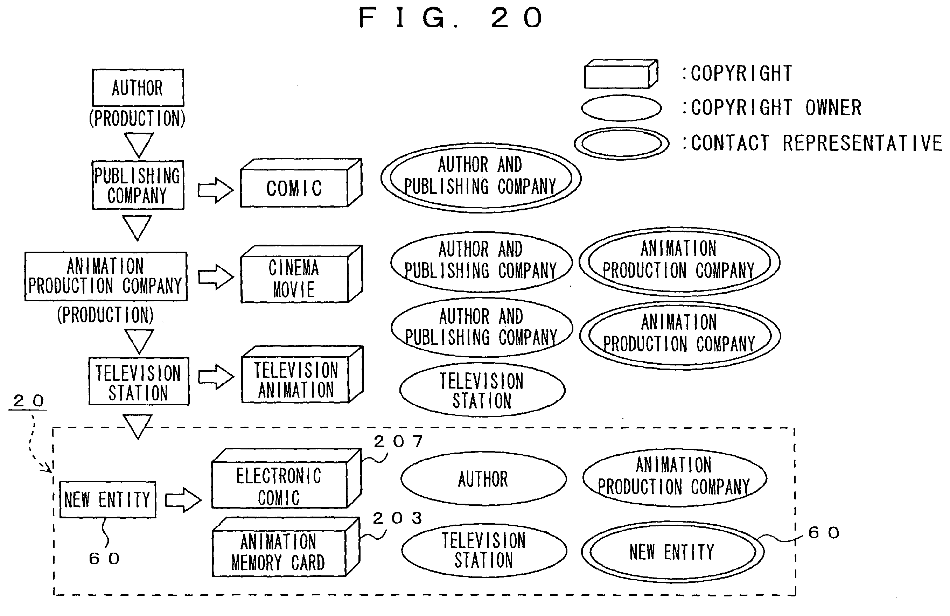

Now, an address of a copy right in the still-frame image business model 20 will be described here. The copy right of animation memory card 203 or a comic 207 that is a copy right material in the still-frame image business model 20 enclosed in the wave line shown in Fig. 20 is shared by author, animation production company, telephone station and new entity (still-frame image production entity) 60. A contact right for accepting the use license concerning secondary utilization thereof is shared by the new entity 60.

In general, an original comic work that is a copy right material is produced by author or comic production. A publishing company edits the original work to provide it as a comic work. This comic work is soled as media such as a comic journal or comics (a book). In this case, the copy right owner is generally the author and/or the publishing company. Therefore, when a comic work is secondarily utilized, it is required to obtain use license from the author and/or the publishing company.

In addition, although it is often that a popular comic work is provided as animation, if a comic work is used as a base for cinema movie release, an animation production company makes use license agreement with the author and/or the publishing company. Then, an animation work is produced based on the original comic work. This animation work is shown in cinemas through a distribution company.

The copy right of a material such as the shown cinema movie is provided to animation production company in addition to the author and/or the publishing company when the material is provided as a comic. In general, the animation production company that is a direct producer of this copy right material has contact right concerning the subsequent second utilization. Therefore, in the case where an animation work is secondarily utilized, at least the use license of animation production company must be obtained.

Further, it is often that the animation work shown in cinema is television broadcast as television animation. In this case, although a television broadcast service entity is listed as a copy right owner. If such the animation work is secondarily utilized, it is general that the copy right owner is the animation production company that is a contact right owner which directly produced a copy right material.

Although these show the flow of copy right for general animation, a modified pattern of these exists. For example, a comic work may be directly provided as television animation without being provided for cinema movie. An original work may be directly provided as animation for cinema movie without a process for comic production. Cinema movie animation may be provided as television animation. Otherwise, although there are a plenty of patterns including specific cases, when the original work is provided as animation, it is general that the contact right for secondary utilization of the animation work (copy right material) possessed by an animation production company.

In contrast, in the still-frame image business model 20 according to embodiments of the present invention, electronic contents such as the animation memory card 203 or the electronic comic 207 are produced. Unlike the conventional example, according to the system of embodiments of the present invention, an animation film is converted into a video signal without an animation comic being converted (printed) into paper media. If a video image element is provided, the image information is compressed intact as a still image such as JPEG by each frame so as to be stored in a data file.

Therefore, a new entity 60 is newly listed in copy right owners. In this case, the contact right is possessed by the new entity 60 that directly produced the animation memory card 203 or the electronic comic 207 that is a copy right material. When these electronic contents are secondarily utilized, the use license may be negotiated with the new entity 60.

Embodiments of the present invention provide a system for electronically creating a sequence of still-frame images such as a comic strip from an already broadcast or shown animated cartoon and providing them to a user comprising: a frame information generating apparatus and an information providing apparatus. The frame information generating apparatus generates digital still-frame image information electronically based on the animated cartoon. The information providing apparatus provides to a user the still-frame image information thus generated. With this configuration, most of frames of the animated cartoon can almost be handled in the digital information processing field without being converted into paper media. The still-frame image information is electronically distributed to the information processing device of users through the existing broadcasting infrastructure or communication infrastructure. Alternately, the still-frame image information is recorded on a recording medium so that the information can be provided to users through the existing sales infrastructure.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A system for creating a sequence of still-frame images electronically from an animation work and providing it to a user, said system comprising:
frame information generating means for electronically generating digital still-frame image information based on said animation work; and
information providing means for providing to a user said still-frame image information generated by said frame information generating means.

2. The system as claimed in claim 1, wherein said frame information generating means comprises:
information reconfiguring means for reconfiguring video image information as said still-frame image information, said video image information being arbitrarily extracted from digital information on contents in said animation work; and
video image information combining means for combining word video image information with the still-frame image information reconfigured by said information reconfiguring means.

3. The system as claimed in claim 1, wherein said frame information generating means comprises:
data converting means for converting frame image information into said digital still-frame image information, said frame image information being arbitrarily extracted from an animation film according to said animation work; and
video image information combining means for combining word video image information with the still-frame image information obtained by said data converting means.

4. The system as claimed in claim 1, wherein information providing means electronically distributes said still-frame image information to a user's information processing device using an existing broadcasting infrastructure and/or an existing communication infrastructure.

5. The system as claimed in claim 1, wherein said information providing apparatus comprises information recording means for recording said still-frame image information on a recording medium; and
wherein it provides said recording medium to a user through an existing sales infrastructure.

6. The system as claimed in claim 1, wherein said animation work is the one already broadcast or shown on a television or a cinema.

7. The system as claimed in claim 1, wherein said still-frame image information includes color information.

8. The system as claimed in claim 1, wherein said still-frame image information is provided to a user in a compressed manner.

9. The system as claimed in claim 2, wherein said still-frame image information includes voice information corresponding to the word video image information.

10. An apparatus for creating a sequence of still-frame images electronically from an animation work, said apparatus comprises:
video image information extracting means for extracting video image information arbitrarily from digital information on contents in said animation work;
information reconfiguring means for reconfiguring as said still-frame image information said video image information extracted from said video image information extracting means; and
video image information combining means for combining word video image information with the still-frame image information reconfigured by said information reconfiguring means.

11. The apparatus as claimed in claim 10, further comprising an operating means for allowing an operator to operate the apparatus to input special effect information into it for enhancing a function of said apparatus,

12. The apparatus as claimed in claim 10, wherein said animation work is the one already broadcast or shown on a television or in a cinema.

13. The apparatus as claimed in claim 10, wherein said still-frame image information includes color information.

14. The apparatus as claimed in claim 10, wherein said still-frame image information includes voice information corresponding to the word video image information.

15. An apparatus for creating a sequence of still-frame images electronically from an animation work, said apparatus comprises:
video image extracting means for extracting frame image information arbitrarily from an animation film according to said animation work;
data converting means for converting said frame image information extracted from said video image extracting means into said digital still-frame image information; and
video image information combining means for combining word video image information with said still-frame image information obtained by said data converting means.

16. The apparatus as claimed in claim 15, further comprising an operating means for allowing an operator to operate the apparatus to input special effect information into it for enhancing a function of said apparatus.

17. The apparatus as claimed in claim 15, wherein said animation work is the one already broadcast or shown on a television or in a cinema.

18. The apparatus as claimed in claim 15, wherein said still-frame image information includes color information.

19. The apparatus as claimed in claim 15, wherein said still-frame image information includes voice information corresponding to the word video image information.

20. A device for processing still-frame image information, said device comprising:
operating means for allowing a user to operate the device to input information on contents of said still-frame image thereinto;
storage means for storing said still-frame image contents information input by said operating means;
display means for displaying said still-frame image based on the still-frame image contents information read out of said storage means; and
control means for controlling at least input/output of said storage and display means, wherein said control means controls said input/output of said storage and display means so that a user can advance said still-frame image in a frame-by-frame manner at a predetermined frame speed.

21. The device as claimed in claim 20, further comprising a setting portion for setting a frame speed of said still-frame image.

22. The device as claimed in claim 20, wherein said still-frame image contents information includes voice information corresponding to the word video image information.

23. The device as claimed in claim 20, further comprising a tuner for receiving said still-frame image information electronically distributed through an existing broadcasting infrastructure.

24. The device as claimed in claim 20, further comprising a communication modem for receiving said still-frame image contents information electronically distributed through an existing communication infrastructure,
wherein said control means controls said storage and display means to allow said storage means to store said still-frame image contents information communicated through said communication modem thereon, and to allow said display means to display said still-frame image based on said still-frame image contents information read out of said storage means.

25. The device as claimed in claim 20, further comprising an interface for attaching a recording medium recording said still-frame image contents information thereon,
wherein said control means controls said recording medium and said display means to allow said recording medium attached to said interface to reads out said still-frame image contents information, and to allow said display means to display said still-frame image based on said still-frame image contents information.

26. The device as claimed in claim 20,wherein said recording medium includes a non-volatile semiconductor memory capable of being recycled.

27. The device as claimed in claim 20, wherein when said still-frame image contents information is previously compressed, said control device controls said display means to allow it to display said still-frame image based on the extended still-frame image contents information.

28. A recording medium for recording information about contents of a sequence of still-frame images created electronically from an animation work, said contents information being generated by reconfiguring video image information as said still-frame image information, said video image information being arbitrarily extracted from information on digital contents included in said animation work; and by combining word video image information with the still-frame image information.

29. The recording medium as claimed in claim 28, wherein said animation work is the one already broadcast or shown on television or in a cinema.

30. The recording medium as claimed in claim 28,
wherein said still-frame image information includes color information.

31. The recording medium as claimed in claim 28, wherein said still-frame image information includes voice information corresponding to the word video image information.

32. A recording medium for recording information about contents of a sequence of still-frame images created electronically from an animation work, said contents information being generated by converting frame image information into said digital still-frame image information, said frame image information being arbitrarily extracted from an animation film according to said animation work; and by combining word video image information with the still-frame image information.

33. The recording medium as claimed in claim 32, wherein said animation work is the one already broadcast or shown on television or in a cinema.

34. The recording medium as claimed in claim 32, wherein said still-frame image information includes color information.

35. The recording medium as claimed in claim 32, wherein said still-frame image information includes voice information corresponding to the word video image information.

36. A method for creating a sequence of still-frame images electronically from an animation work and providing it to a user, said method comprising the steps of:
generating digital still-frame image information electronically based on said animation work; and
providing to a user said still-frame image information thus generated.

37. The method as claimed in claim 36, wherein the step of generating the still-frame image information comprises the substeps of:
extracting video image information arbitrarily from information on digital contents included in said animation work;
reconfiguring as said still-frame image information said video image information thus extracted; and
combining word video image information with the still-frame image information thus reconfigured.

38. The method as claimed in claim 36, wherein the step of generating the still-frame image information comprises the substeps of:
extracting frame image information arbitrarily from an animation film according to said animation work;
converting said frame image information thus extracted into said digital still-frame image information; and
combining word video image information with said still-frame image information thus converted.

39. The method as claimed in claim 36, further comprising the step of adding special effect information for enhancing a function into said still-frame image information.

40. The method as claimed in claim 36, wherein the step of providing said still-frame image information comprises the substep of electronically distributing said still-frame image information to a user's information processing device using an existing broadcasting infrastructure and/or an existing communication infrastructure.

41. The method as claimed in claim 36, wherein the step of providing said still-frame image information comprises the substep of:
recording said still-frame image information on a recording medium; and
providing said recording medium to a user through an existing sales infrastructure.

42. The method as claimed in claim 36, wherein said animation work is the one already broadcast or shown on television or in a cinema.

43. The method as claimed in claim 36, wherein said still-frame image information includes color information.

44. The method as claimed in claim 36, wherein said still-frame image information includes voice information corresponding to the word video image information.

45. The method as claimed in claim 36, wherein said still-frame image information is provided to a user in a compressed manner.
